(19) Europäisches Patentamt / European Patent Office / Office européen des brevets

(11) **EP 3 878 658 B1**

(12) **EUROPEAN PATENT SPECIFICATION**

(45) Date of publication and mention
of the grant of the patent:
**13.11.2024 Bulletin 2024/46**

(21) Application number: **19881157.2**

(22) Date of filing: **07.11.2019**

(51) International Patent Classification (IPC):
*G06T 11/00* *(2006.01)*    *B41M 3/14* *(2006.01)*

(52) Cooperative Patent Classification (CPC):
**B42D 25/21; B41M 3/14; B42D 25/342;**
**B42D 25/351; B42D 25/45; G06T 11/001**

(86) International application number:
**PCT/JP2019/043731**

(87) International publication number:
**WO 2020/096009 (14.05.2020 Gazette 2020/20)**

(54) **MOIRE FORMATION PATTERN GENERATION METHOD, MOIRE FORMATION PATTERN GENERATION DEVICE, AND MOIRE FORMATION PATTERN GENERATION SYSTEM**

VERFAHREN ZUR ERZEUGUNG VON MOIRÉ-FORMATIONSMUSTERN, VORRICHTUNG ZUR ERZEUGUNG VON MOIRÉ-FORMATIONSMUSTERN UND SYSTEM ZUR ERZEUGUNG VON MOIRÉ-FORMATIONSMUSTERN

PROCÉDÉ DE GÉNÉRATION DE MOTIF DE FORMATION DE MOIRÉ, DISPOSITIF DE GÉNÉRATION DE MOTIF DE FORMATION DE MOIRÉ ET SYSTÈME DE GÉNÉRATION DE MOTIF DE FORMATION DE MOIRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2018 JP 2018211156**

(43) Date of publication of application:
**15.09.2021 Bulletin 2021/37**

(73) Proprietor: **Toppan Printing Co., Ltd.**
**Tokyo 101-0024 (JP)**

(72) Inventors:
• **TAKIZAWA, Yumi**
**Tokyo 101-0024 (JP)**
• **INOKUCHI, Masami**
**Tokyo 101-0024 (JP)**
• **MURILLO-MORA, Luis Manuel**
**Tokyo 101-0024 (JP)**

(74) Representative: **Hoffmann Eitle**
**Patent- und Rechtsanwälte PartmbB**
**Arabellastraße 30**
**81925 München (DE)**

(56) References cited:
**WO-A1-01/39138         JP-A- 2006 007 430**
**JP-A- 2007 128 075     JP-A- H10 230 674**

• **MUNOZ-RODRIGUEZ J A ET AL: "Image encryption based on moire pattern performed by computational algorithms", OPTICS COMMUNICATIONS, ELSEVIER, AMSTERDAM, NL, vol. 236, no. 4-6, 15 June 2004 (2004-06-15), pages 295 - 301, XP004510724, ISSN: 0030-4018, DOI: 10.1016/J.OPTCOM.2004.03.089**

**Description**

[Technical Field]

The present invention relates to methods for generating moiré-producing pattern, apparatuses for generating moiré-producing pattern, and systems for generating moiré-producing pattern.

[Background Art]

The term "moiré" refers to an interference fringe observed when a plurality of periodic patterns or structures are superimposed on each other. Further, in physical terms, moiré is beat phenomenon between two spatial frequencies.
Since moiré occurs in various forms, moiré may be removed as being undesirable in some cases, but may be useful in other cases.
For example, PTL 1 discloses "a moiré image forming body having a latent image to produce a moiré image for preventing counterfeiting/duplication, the moiré image forming body including: a substrate on which a wavy stripe is formed of transverse waves and a stripe pattern substantially perpendicular to the wavy stripe is provided, the stripe pattern being positioned on a background of the wavy stripe, wherein the wavy stripe forms a relief image, and the stripe pattern is composed of a latent image portion shifted by 1/2 pitch and a non-latent image portion, which is a portion other than the latent image portion."
Further, PTL 2 discloses a method and a device for processing an image by which an interference fringe of a desired moiré pattern is produced without using a camera or the like.
In the image processing method described above, when a user inputs an executable file name, an output image file name, various parameters, and the like via a command parameter input unit, the parameters are given to an arithmetic unit through a controller, and the arithmetic unit performs arithmetic operation to prepare an interference fringe by a moiré phenomenon. According to this image processing method, the image data of the prepared moiré pattern is stored in a storage unit and outputted as necessary from a display unit or a simplified image output unit as output image data. Then, after the output image is verified by the output unit, a hard copy of the image is outputted by an image output unit.
PTL 3 describes that small patterns are buried beforehand in a print object so that a first image is formed in a state a distinction instrument is superposed on the print object and a second image is formed in a state the distinction instrument rotated by 90 deg. is superposed on the print object. That is, a position of each small pattern is determined so that the first image is formed when the distinction instrument is applied on the print object, and the second image is formed when the distinction instrument 3 rotated by 90 deg. is placed on the object. Different images can be formed between when the distinction instrument is placed on the print object and when the distinction instrument is rotated by 90 deg.
NPTL 1 describes an encryption technique and decryption based on moiré fringe pattern. The described technique here provides a valuable tool for sharing and store image information in electronic way. This technique is a virtual optical process, whose optical operations are performed by computer. The encryption is achieved by generating a deformed fringe pattern. This fringe pattern is shown in computer screen as a fringe pattern deformed according to the face image. The decryption is achieved by extracting the envelope of the moiré pattern. This pattern is obtained by overlapping the key code and the encrypted image.

[Citation List]

PTL 1: JP 4403694 B
PTL 2: JP-H-087115 A
PTL 3: JP H10 230674 A

NPTL 1: MUNOZ-RODRIGUEZ J AET AL: "Image encryption based on moire pattern performed by computational algorithms", OPTICS COMMUNICATIONS, ELSEVIER, AMSTERDAM, NL, vol. 236, no. 4-6, 15 June 2004, pages 295-301

[Summary of the Invention]

[Problem to be Solved by the Invention]

However, in the conventional art, in preparation of a pattern for producing a moiré image, it is required to manually prepare individual stripe patterns according to the design pattern, or input various command parameters to an image processing device so that the produced moiré image can be checked on the display unit while repeating trial and error.

The present invention has been made in view of such problems, and is directed to provide a system for generating a moiré image-producing pattern by inputting data such as an input image, a feature value thereof, and layer information, and provide a moiré display using a pattern obtained from the system.

[Solution to Problem]

In order to solve the above problems, the claims define method for generating a moiré-producing pattern according and an apparatus for generating a moiré-producing pattern according to the independent claims. The dependent claims concern particular embodiments.

[Advantageous Effects of Invention]

According to the present invention, a moiré image-producing pattern can be efficiently generated by inputting data such as an input image and layer information to the generating system to set an aperture/non-aperture ratio of a moiré image-producing pattern.

[Brief Description of the Drawings]

Fig. 1 is a diagram schematically illustrating an input image according to the present disclosure.

Fig. 2 is a diagram schematically illustrating layer information according to the present disclosure.

Fig. 3 is a diagram schematically illustrating information regarding a display according to the present disclosure.

Fig. 4 is a diagram schematically illustrating a basic pattern according to the present disclosure.

Fig. 5 is a schematic diagram illustrating an example of setting aperture/non-aperture parts by adopting transmittance as a feature value, in which a transmittance value in a rectangular waveform is obtained.

Fig. 6 is a schematic diagram illustrating an example of setting aperture/non-aperture parts by adopting transmittance as a feature value, in which a transmittance value in a sine waveform is obtained.

Fig. 7 is a diagram illustrating a cross-section of a configuration example of a display according to the present disclosure.

Fig. 8 is a diagram illustrating a cross-section of a configuration example of another display according to the present disclosure.

Fig. 9 is a diagram illustrating a cross-section of a configuration example of still another display according to the present disclosure.

Fig. 10 is a diagram illustrating a cross-section of a configuration example of still another display according to the present disclosure.

Fig. 11 is a diagram illustrating a cross-section of a configuration example of still another display according to the present disclosure.

Fig. 12 is a diagram illustrating a basic pattern of a stripe pattern according to the present disclosure and example patterns in which an aperture/non-aperture ratio has been changed.

Fig. 13 is a diagram illustrating an example of an input image according to the present disclosure.

Fig. 14 is a diagram illustrating an example of a front side output pattern according to the present disclosure.

Fig. 15 is a diagram illustrating an example of a rear side output pattern according to the present disclosure.

Fig. 16 is a view showing an example of appearance evaluation results according to the present disclosure.

Fig. 17 is a view showing a formula representing a transmittance $T_B$ of a second pattern and a coefficient table, according to the present disclosure.

Fig. 18 is a view showing an example of density levels according to the present disclosure.

Fig. 19 is a flowchart showing a method for adjusting an aperture/non-aperture ratio according to the present disclosure.

Fig. 20 is a diagram illustrating an input image according to the present disclosure and a moiré-producing pattern in which aperture/non-aperture ratios are set corresponding to the input image.

Fig. 21 is a diagram of a phase shift amount for a feature value (grayscale value) according to the present disclosure.

Fig. 22 is a conceptual diagram illustrating a feature value (grayscale value) with a phase shift amount according to the present disclosure.

Fig. 23 is a diagram illustrating a pattern in which stripes are arranged obliquely according to the present disclosure.

Fig. 24 is a diagram illustrating a pattern of concentric circles according to the present disclosure.

Fig. 25 is a view showing a method for determining a phase shift amount according to the present disclosure.

Fig. 26 is a view illustrating an example of a first pattern map representing an intensity of pixels of a stripe drawn in a first pattern among first and second patterns constituting a moiré-producing pattern according to the present disclosure.

Fig. 27 is an enlarged view of a portion of a region of the first pattern map shown in Fig. 26.

Fig. 28 is a view illustrating an example of a second pattern map representing an intensity of pixels of a stripe drawn in a second pattern among first and second patterns constituting a moiré-producing pattern according to the present disclosure.

Fig. 29 is a view showing an intensity of a first pattern according to the present disclosure, represented by a sine curve.

Fig. 30 is a view showing a case where a phase of the sine curve shown in Fig. 29 is shifted according to a feature value.

Fig. 31 is a diagram illustrating an example of an input image according to the present disclosure.

Fig. 32 is a diagram illustrating an example of a moiré-producing pattern generated by shifting a phase of the input image shown in Fig. 31 according to a feature value.

Fig. 33 is a view showing a type of a feature value, a numerical range for each type of the feature value, and a calculation formula of a phase shift amount for each type of the feature value.

Fig. 34 is a view illustrating an example of an optical configuration for generating moiré according to the present disclosure.

Fig. 35 is a view illustrating an example of an optical configuration for generating moiré according to the present disclosure.

Fig. 36 is a view illustrating an example of an optical configuration for generating moiré that appears to be recessed according to the present disclosure.

Fig. 37 is a view illustrating an example of an optical configuration of depth levels according to the present disclosure for making moiré appear to be recessed.

Fig. 38 is a view illustrating an example of depth levels according to the present disclosure for making moiré appear to be recessed.

Fig. 39 is a view illustrating an example of an optical configuration of depth levels according to the present disclosure for making moiré appear to project.

Fig. 40 is a view illustrating an example of depth levels according to the present disclosure for making moiré appear to project.

Fig. 41 is a diagram illustrating an example of an input image according to the present disclosure.

Fig. 42 is a diagram illustrating an example of a depth cross-section in which layers of an input image correspond to different depth levels.

Fig. 43 is a diagram illustrating an example of a depth cross-section in which a depth distance increases linearly within the same layer.

Fig. 44 is a diagram illustrating an example of a depth cross-section in which a depth distance is partially changed within the same layer.

Fig. 45 is a diagram illustrating an example of a depth cross-section in which a depth distance is changed from a center to both ends within the same layer.

Fig. 46 is a diagram illustrating an example of a moiré-producing pattern generated by setting a pitch different for each layer.

Fig. 47 is a view showing a method for generating a moiré-producing pattern by using depth levels according to the present disclosure.

Fig. 48 is a flowchart for obtaining an output pattern as an image.

Fig. 49 is a view showing a configuration of a computer system for implementing an embodiment of the present disclosure.

Fig. 50 is a view showing a configuration of a system for generating a moiré-producing pattern according to the present disclosure.

[Description of Embodiments]

Embodiments of the present invention will be described below. It should be noted that embodiments of the present invention are not limited to those described below. Modifications such as design modifications may be made on the basis of the knowledge of a person skilled in the art, as long as such modifications are covered by the scope of the appended claims.

In the following description, methods and techniques for generating a moiré image-producing pattern will be described.

<1 Input Information>

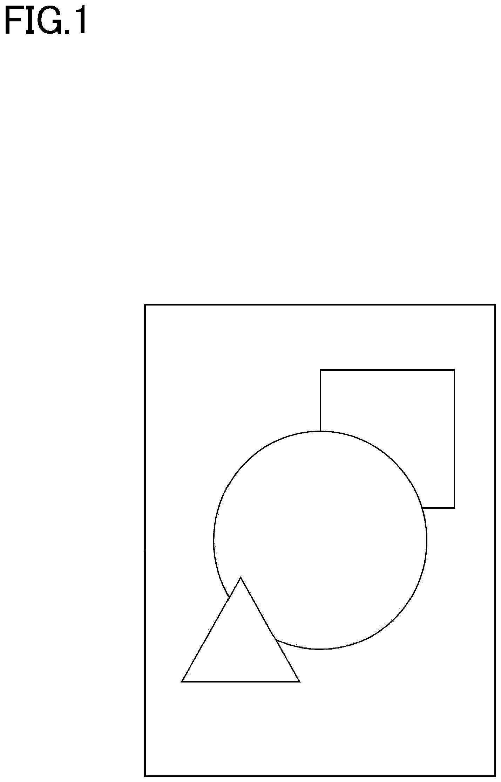

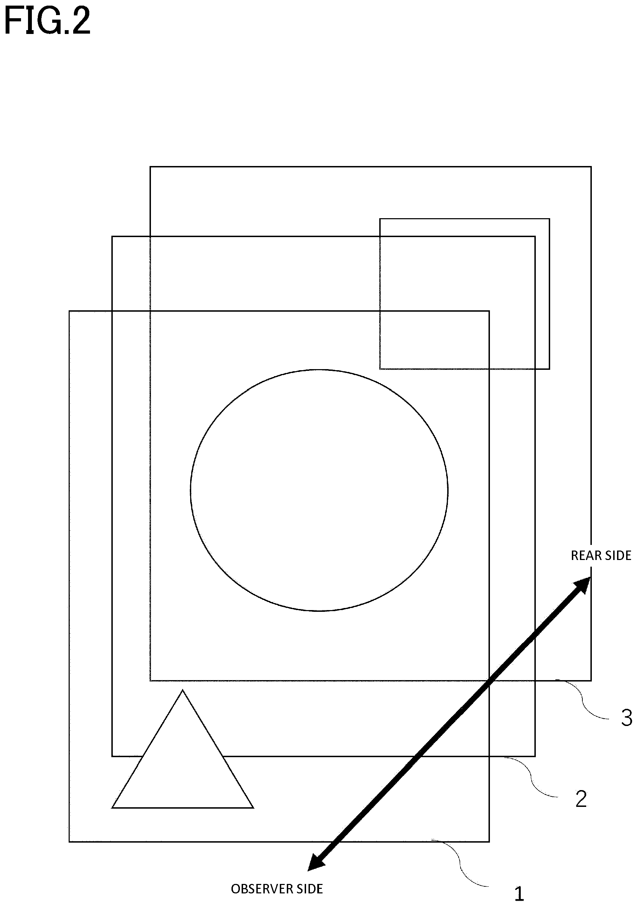

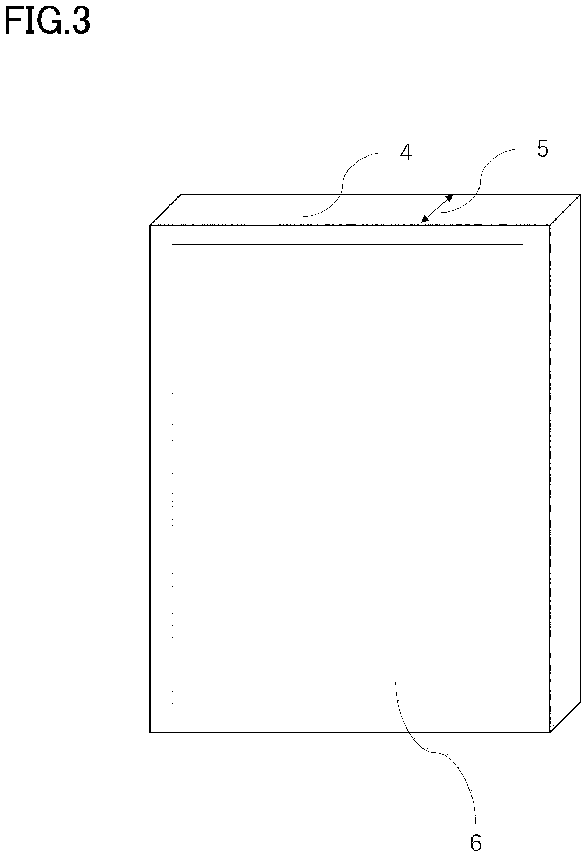

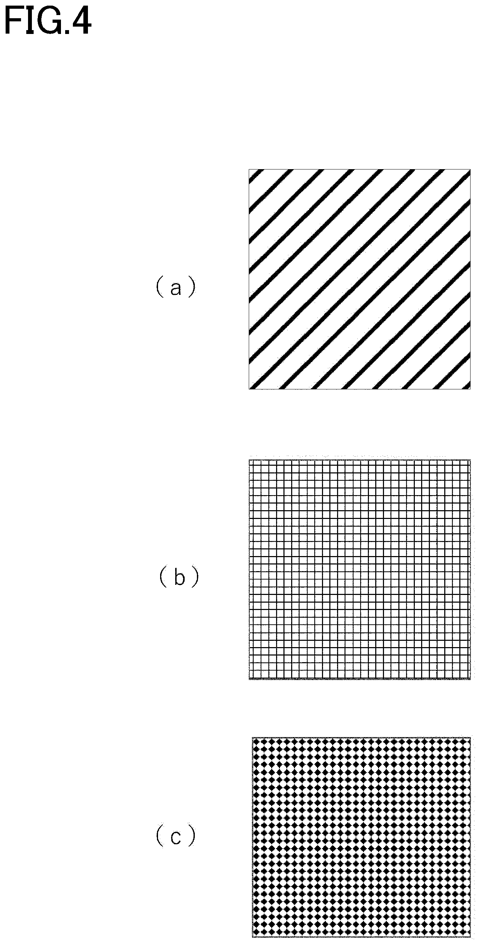

Figs. 1 to 4 are diagrams schematically illustrating input information in a system for generating a moiré image-producing pattern. Examples of the input information to the generating system include a feature value of input image (Fig. 1), layer information (Fig. 2), information regarding a display (Fig. 3), and basic pattern information (Fig. 4).

<1-1 Input Image and Feature Value>

Fig. 1 is a diagram schematically illustrating an example input image for creating its moiré image as desired. The term "input image" as used herein refers to image data, such as a design pattern, for which creation of its moiré pattern is desired. Fig. 1 illustrates an input image composed of three parts, and the parts are illustrated as a triangle, a circle, and a rectangle for convenience of illustration. These parts are illustrated with a sense of depth. It should be noted that the input image is not limited to one shown in the figure, and may be any image. The input image may be color or monochrome.

The term "feature value of an input image" as used herein refers to a value related to the input image, such as luminance, saturation, hue, density, transparency, lightness, chromaticity, or grayscale level (grayscale value) of the image. Such a feature value may be provided for each design, part, area, pixel, or block composed of pixels of the input image. Further, a representative value such as an average, median, maximum, or minimum value of each area may be used.

<1-2 Layer Information>

Fig. 2 is a diagram schematically illustrating layer information by separating the design pattern of Fig. 1 into individual layers.

The term "layer information" as used herein refers to information specifying a sense of depth of designs or parts of the input image, which can be expressed by numerical values indicating a specific distance in the depth direction or simply by the order of arrangement in the depth direction.

The use of this layer information can realize a clear sense of depth in a moiré image. Further, this enhances an immersive feeling to an observer who views a moiré image.

Fig. 2 is a diagram schematically illustrating three parts composed of a triangle, a circle, and a rectangle as three layers (1, 2, and 3). It should be noted that the number of layers is not limited to three, and distances between layers may not always be discrete but may also be continuous.

Further, the sense of depth between the layers can be imparted so that they appear to project (emerge) from the moiré display toward the observer or appear to be located on a rear side of the moiré display (recessed from the moiré display) when viewed by the observer.

<1-3 Information Regarding Display>

Fig. 3 is a diagram schematically illustrating information regarding a moiré display. The term "moiré display" as used herein refers to a display that uses a moiré image, and typically includes posters, panels, POPs, and the like.

Information regarding a moiré display 4 includes a size of a display region 6, a panel thickness 5 (also referred to as a "gap"), a refractive index of a material constituting the panel, and a "viewing distance," which is a distance from an average observer to the display region.

Since a stereoscopic moiré is produced by binocular parallax of the observer, information on a positional relationship between the observer and the panel is required for calculation of the parallax.

Basically, when the center of the display region 6 coincides with the height of the observer's eyes, the distance between the observer and the panel corresponds to the viewing distance.

Further, when the center of the display region 6 does not coincide with the height of the observer's eyes, or when the height of the position at which a moiré image is produced does not coincide with the height of the observer's eyes, the "viewing distance" can be corrected by the relationship between the position at which moiré is produced and the position of the observer's eyes.

<1-4 Basic Pattern Information>

The term "basic pattern" as used herein refers to a periodic pattern or structure superimposed to produce moiré.

Fig. 4 shows typical example basic patterns, including a linear pattern (Fig. 4(a)) as a unidirectional pattern, a grid pattern (Fig. 4(b)) and a check pattern (Fig. 4(c)) as bidirectional patterns. The basic pattern is not limited to those shown in the figure, and the unidirectional pattern may also be a wavy pattern, a zigzag pattern, or a repetition of characters. Further, the bidirectional pattern may also be a random pattern or characters in addition to a geometrical pattern such as a dot pattern.

In the following description, the basic pattern may also be referred to as a "first pattern." The first pattern is not limited to the basic pattern described above, but may also be a pattern positioned on a rear side.

The term "basic pattern information" as used herein refers to information specifying the shape and properties of the basic pattern described above, such as the shape, line width, pitch, L/S (line & space) ratio, angle, and aperture/non-aperture ratio.

Further, the term "feature value of a pattern" as used herein refers to transmittance, reflectance, optical density, ink density, lightness, grayscale level (grayscale value) or the like.

Moreover, the term "aperture/non-aperture ratio" as used herein is a novel concept indicating properties of the pattern, and is different from conventional information such as line width, pitch, and L/S (line & space) ratio. In the following description, the "aperture/non-aperture ratio" will be described.

<1-5 Aperture/Non-aperture Ratio>

A pattern is repeated at a regular cycle. Therefore, a feature value of the pattern periodically varies as well. In one cycle of a feature value of the pattern that periodically varies, a portion having high lightness or transparency is referred to as an aperture, and the remaining portion is referred to as a non-aperture.

Specifically, a region having a feature value of a predetermined value or more in one cycle may be referred to as the aperture. In determination of the predetermined value, an average value or a median value of the feature value of the entire pattern may be adopted. Alternatively, normalization using a maximum value and a minimum value may be performed, and an integration ratio may be used.

Furthermore, an FFT (fast Fourier transform) may be used to determine the aperture/non-aperture ratio.

In order to obtain a feature value of the pattern, a measurement value from the pattern or a pixel value itself may be used, or an average value or a median value of the peripheral pixels may be used.

In addition, regardless of the above conditions, one or more specific regions in the pattern can be defined as an aperture, a non-aperture, or a region which is neither an aperture nor a non-aperture. The specific region described above refers to, for example, a region corresponding to an image, a character, or a pattern intentionally provided for a design purpose, or a dirty spot or a bare spot that may occur during manufacturing.

In the case of a unidirectional straight line pattern (Fig. 4(a)), a feature value is measured using a cycle of the pattern in a direction perpendicular to the extending direction of the straight lines. In the case of a grid pattern (Fig. 4(b)), a feature value is measured using two directions in which a pattern appears periodically.

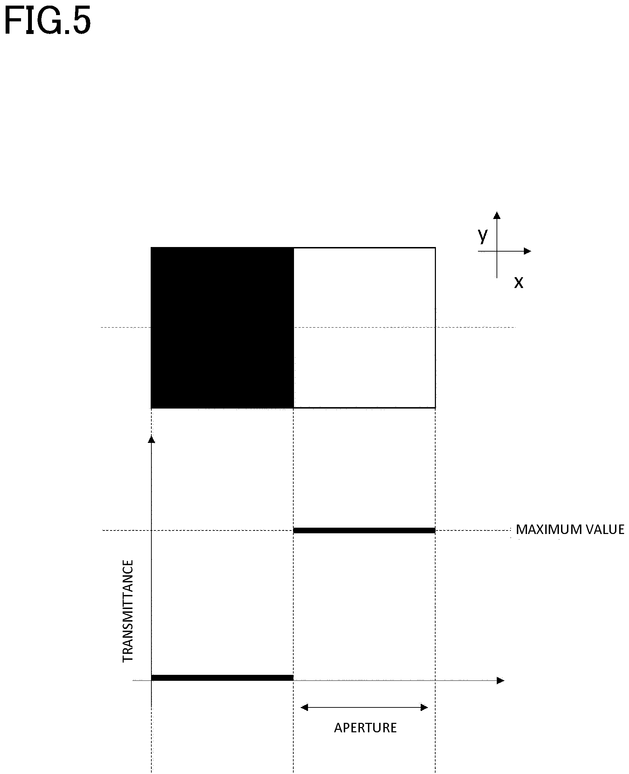

Fig. 5 is a schematic diagram illustrating an example of setting aperture/non-aperture parts by adopting transmittance as a feature value, in which a transmittance value of a rectangular waveform is obtained.

In this example, a region showing a maximum transmittance is an aperture, and the other region is a non-aperture.

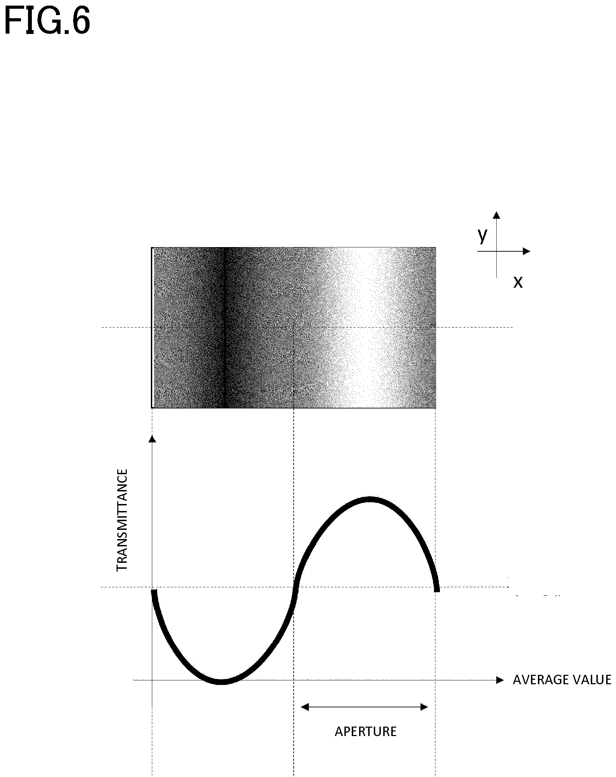

Fig. 6 is a schematic diagram illustrating an example of setting aperture/non-aperture parts by adopting transmittance as a feature value, in which a transmittance value of a sine waveform is obtained.

In this example, a region showing an average transmittance or more is an aperture, and the other region is a non-aperture.

<1-6 Pitch>

The term "pitch" as used herein refers to a distance between the aperture and the non-aperture. The pitch may be measured, for example, between the centers of the aperture and non-aperture, or between the boundaries of the aperture and non-aperture. In other words, the pitch is a distance of one cycle of a pattern repeated at a definite cycle.

As will be described later, the pitch of the pattern contributes to the appearance of moiré which changes as the observer moves. For example, when the pitch is fine (that is, a distance of one cycle is small), the moiré fringe is emphasized, and the apparent overlap is likely to shift. Accordingly, an effect in which the pattern appears to be recessed (depth effect) is more recognizable. This shift has an influence on the relationship between the front side pattern and the rear side pattern.

The pitch is basically measured in a direction in which the pattern is scanned (that is, a direction in which the aperture and non-aperture are repeated). For example, when the pattern is stripes, the pattern is repeated in a direction perpendicular to the extending direction of the straight lines. Accordingly, a pitch is measured in a direction perpendicular to the extending direction of the straight lines. Similarly, when the aperture and non-aperture are formed of straight lines, which are repeated to form a pattern, the pitch is measured in a direction in which the pattern is repeated (a direction perpendicular to the extending direction of the curved lines). Further, when the aperture and non-aperture in the pattern are repeated in a plurality of directions (for example, a check pattern or the like), the pitch can be measured in respective directions or measured only in one direction.

In the above description, the pitch in a regular pattern such as stripes and checks is described as an example. However, the pitch described in the present disclosure can be measured, not only for vertical or horizontal stripes, checks, and the like, but also for a pattern with a different angle (for example, obliquely arranged stripes), an irregular pattern (for example, unevenness caused by printing error), a pattern with an irregular pitch (for example, a pitch varying in a pattern), a pattern with different colors, or the like. When the pitch, angle, color, or the like is different in the same image, a pitch may be calculated for each component (layer, region, or the like) of the image.

Further, even when the pitch is the same, the extending direction of the pattern (for example, the direction of straight lines of stripes) may contribute to a change in the appearance of the moiré. For example, the rate at which the moiré changes relative to the movement direction of the observer may vary depending on the angle of the pattern. In one specific example of this phenomenon, it is assumed that a pattern having stripes vertically arranged and a pattern having stripes obliquely arranged at 45 degrees have the same pitch. When the observer moves transversely relative to these patterns, the observer may feel that the change in appearance of moiré is slower in the moiré produced by the pattern having stripes obliquely arranged at 45 degrees compared with the moiré produced by the pattern having stripes vertically arranged.

The reason for this is, when the pattern is scanned in the viewing direction of the observer, the pattern having stripes arranged at 45 degrees appears as if it has a wider pitch than the pattern having stripes vertically arranged. Accordingly, the rate of the change in appearance of the moiré relative to the movement of the observer can be controlled by adjusting the extending direction of the pattern, which can improve the design of the moiré.

<2 Output P attern>

A moiré-producing pattern of the pattern generating system according to the present invention is composed of a first pattern (front side pattern) and a second pattern (rear side pattern).

A moiré-producing pattern for producing a moiré image is provided on the premise that the first pattern and the second pattern are superimposed on each other, and a pattern positioned on a side closer to the observer is referred to as a front side pattern, and a pattern positioned on a side farther from the observer is referred to as a rear side pattern.

<3 Configuration of Display>

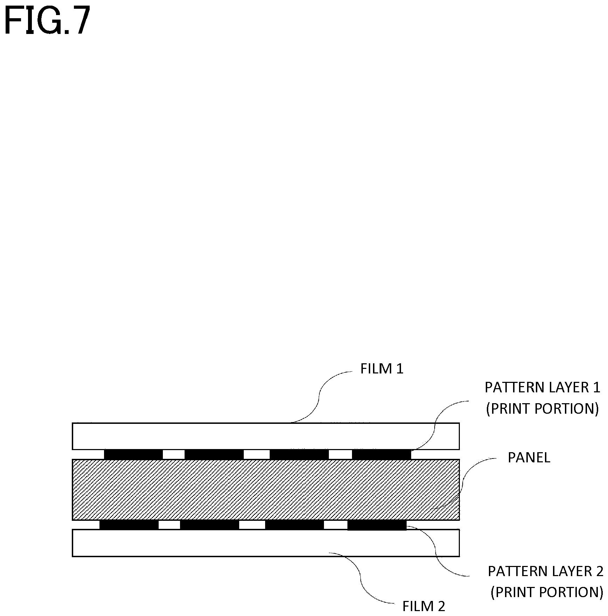

Fig. 7 is a diagram illustrating a cross-section of a configuration example (basic type) of a display. In the example shown in Fig. 7, films 1 and 2 on which pattern layers 1 and 2 are printed, respectively, are bonded to each other with a panel therebetween. The term "pattern layer" as used herein refers to a layer on which a pattern is drawn by printing or the like. The pattern layers 1 and 2 in Fig. 7 are the first pattern and the second pattern, respectively, outputted by the generating system.

In the case of this basic configuration, the first pattern and the second pattern are printed on the films 1 and 2, respectively, on a surface facing the panel such that the panel is in contact with the first pattern and the second pattern. Accordingly, in generation of a pattern, the thickness (gap) and the refractive index of a single panel may be considered.

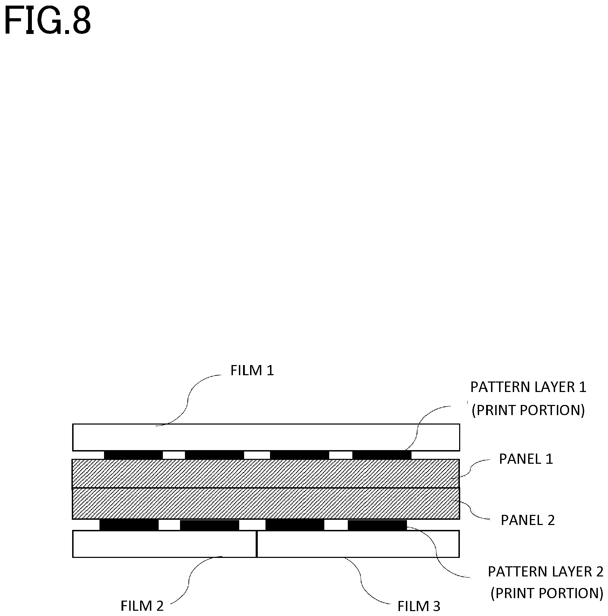

Fig. 8 is a diagram illustrating a cross-section of a configuration example (panel/film divided type) of another display. In the example shown in Fig. 8, a panel is divided into a panel 1 and a panel 2 in the thickness direction, and the lower film is divided into a film 2 and a film 3 across the plane of the film.

The panel can be divided across the plane of the film as well as the thickness direction, and the number of divisions and how the film is divided can be freely designed. As the panel and the film are divided, the accuracy in installation and bonding of the display can be easily maintained when the display has a large area or the like.

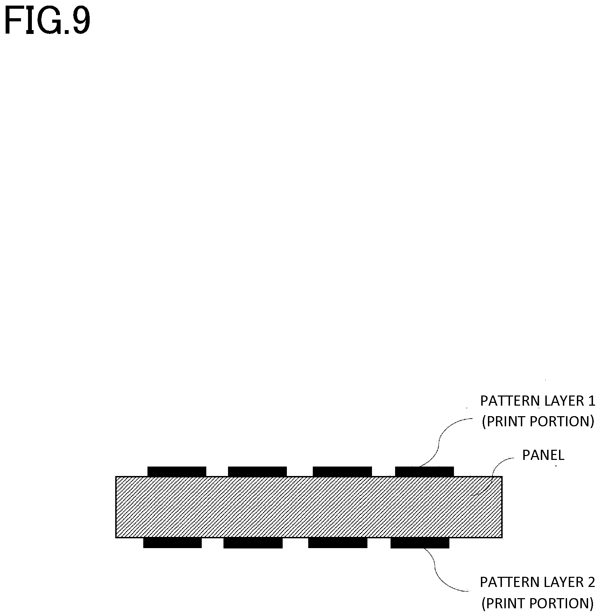

Fig. 9 is a diagram illustrating a cross-section of a configuration example (direct printing type) of still another display. In the example shown in Fig. 9, the pattern layers 1 and 2 are printed directly on the panel. Since the display, in which a resin layer made of a UV ink or the like is laminated on the panel, can be formed without using a film or the like, bonding of a film layer can be omitted.

In addition, a display may also be formed by performing direct printing on one of the pattern layer 1 and the pattern layer 2 or on a portion of the pattern layer 1 or the pattern layer 2, and bonding a film on which a pattern layer is printed as shown in Fig. 7 or 8 to the other portion.

When a film on which a pattern layer is printed is bonded to the panel, an adhesive layer may be provided on the film. The material for the adhesive layer may be a polymer. Examples of the polymer include acrylic, polyester, polyurethane, and the like. The adhesive layer may be releasable from the panel. In this case, a film on which a pattern layer is printed can be easily replaced to shorten the switching time of the display.

Further, a film on which a pattern layer is printed may be bonded to a curved surface of a cylinder, a cone, or the like. A curvature of the curved surface is preferably approximately 0 or more and 0.1 [/mm] or less.

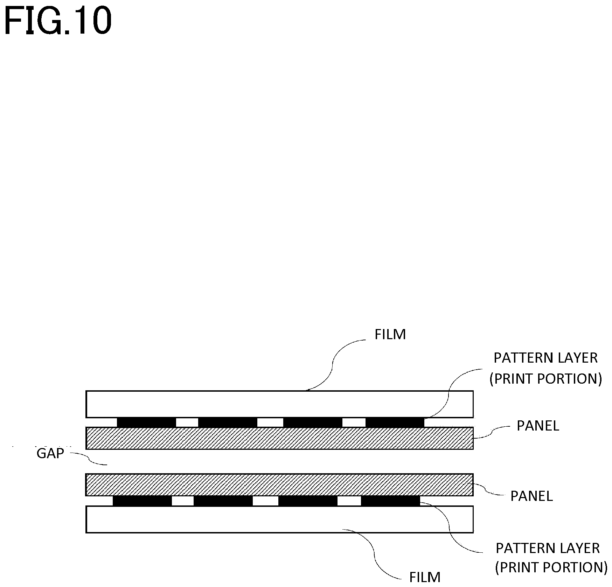

Fig. 10 is a diagram illustrating a cross-section of a configuration example (gap type 1) of still another display.

In the example shown in Fig. 10, a gap is provided between the panel 1 and the panel 2. The gap is filled with air, liquid (such as water or oil), or other materials having a refractive index different from that of the panels.

The gap in the case of Fig. 10 corresponds to a distance between the pattern layer 1 and the pattern layer 2, and the refractive index of the gap is a combination of the refractive indices of the panel 1, the panel 2, and a filler in the gap.

Since the display shown in Fig. 10 can be divided in the thickness direction, a set of the panel 1 and the panel 2 can be used for display windows, automatic doors, or the like. This is advantageous in that the display can be installed in existing facilities. Further, a display installed at movable positions such as automatic doors can further enhance the moiré effect.

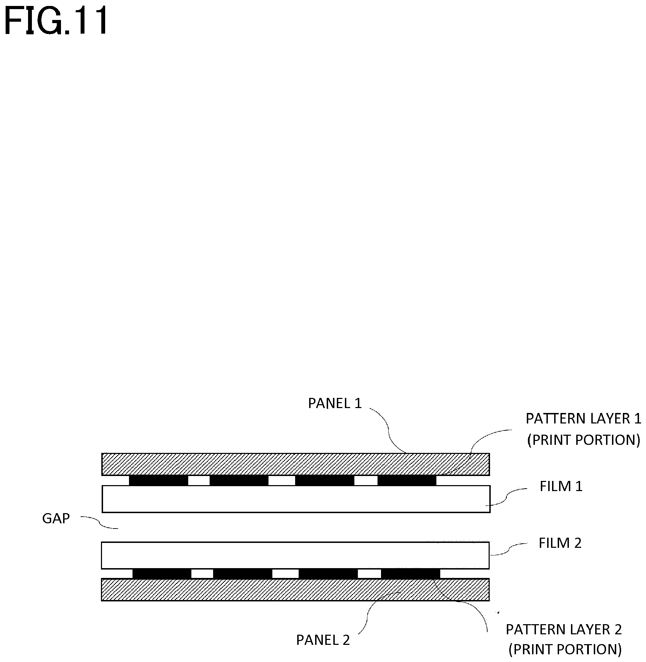

Fig. 11 is a diagram illustrating a cross-section of a configuration example (gap type 2) of still another display. In the example shown in Fig. 11, the film 1 and the film 2 are bonded to the inner surface of the panel 1 and the panel 2, respectively, to provide a gap between the film 1 and the film 2.

When the panel 1 and the panel 2 are display panels installed outside, this configuration can protect the films 1 and 2 from the outdoor environment.

The gap in the case of Fig. 11 corresponds to a distance between the pattern layer 1 and the pattern layer 2, and the refractive index of the gap is a combination of the refractive indices of the film 1, the film 2, and a filler in the gap.

In the configuration of the display described above, whether the pattern layer is provided between the film and the panel or on both sides of the panel can be appropriately determined. However, in view of abrasion resistance and dust prevention, the pattern layer is preferably provided inside the panel.

Further, the configurations described with reference to Figs. 7 to 11 can be partially combined or modified.

The panel 1 and the panel 2 may be the same or different. Materials for the film 1 and the film 2 may also be the same or different.

<4 Characteristics of Moiré Appearance>

Due to the difference in pitch and aperture/non-aperture ratio between the first pattern (front side) and the second pattern (rear side), and a gap existing between the first pattern (front side) and the second pattern (rear side), the moiré has the following composite effects.

<4-1 Moiré Intensity >

The moiré intensity tends to increase as the aperture/non-aperture ratio of the first pattern (front side) and the second pattern (rear side) becomes close to 1.

<4-2 Apparent Density>

The term "Apparent density" as used herein refers to a degree of apparent density due to the difference in aperture/non-aperture ratio between the first pattern (front side) and the second pattern (rear side). As the aperture/non-aperture ratio of the pattern increases, the pattern and moiré tend to appear lighter.

<4-3 Variation Amount of Moiré>

The phase of moiré varies depending on the position (angle) of the observer since the first pattern (front side) and the second pattern (rear side) are superimposed on each other with a gap therebetween. As the aperture/non-aperture ratio increases, the moiré tends to remain light, and as the aperture/non-aperture ratio decreases, the moiré tends to remain dark (that is, there is little change). Furthermore, as the aperture/non-aperture ratio becomes close to 1, the variation amount of the moiré tends to increase.

<5 Evaluation of Moiré Appearance>

In evaluation of moiré appearance, the above effects and the like are collectively observed. Further, in addition to these effects, the characteristics of moiré appearance may be evaluated from the viewpoint of "moiré stability," which indicates the degree to which the moiré image is recognized even when the viewing distance is larger than the expected distance.

In the present invention, the moiré appearance is evaluated focusing on the aperture/non-aperture ratio of the pattern to comprehensively determine the suitability of moiré when it is used as a design.

The determination is specifically performed by comparison or grade evaluation such as using 3 levels (i.e., good, fair, and poor).

In addition to the overall evaluation, evaluation of degree of lightness/darkness of the appearance of moiré image, degree of mobility of moiré image, and the like may be additionally performed (the evaluation may or may not be performed since what is regarded as important is different depending on the design that is desired to be expressed).

Further, in the present invention, when the first pattern (front side) and the second pattern (rear side) are generated from the input image, the aperture/non-aperture ratio is selected considering the results of the appearance evaluation.

In general, the appearance of the moiré or the like varies depending on the pattern used, configuration of image, viewing conditions, and the like. Accordingly, it is desired to evaluate each of the specific attributes in addition to the overall appearance evaluation. Therefore, in the present disclosure, the following attributes are also evaluated.

<5-1 Degree of Lightness/Darkness of the Moiré Image>

The "degree of lightness/darkness of the moiré image" refers to the evaluation of apparent lightness (light/dark, density) of moiré appearance. The degree of lightness/darkness of the moiré image varies mainly due to the composite effects of the moiré intensity and the apparent density. The evaluation is made by comparison or grade evaluation such as using 11 levels (dark:-5, -4, ..., 4, 5:light).

<5-2 Degree of Mobility of Moiré Image>

The "degree of mobility of moiré image" refers to the evaluation of moiré appearance for movement or flickering of the moiré image. The degree of mobility of the moiré image varies mainly due to the composite effects of the moiré intensity and the moiré mobility. The evaluation is made by comparison or grade evaluation such as using 6 levels (low:0, 1, ..., 4, 5:high).

<6 Example of Preparation of Moiré-producing pattern>

In the following description, a method and a system for preparing a moiré-producing pattern according to an input image of the example will be described by taking an example of the case using a stripe pattern.

<6-1 Basic Pattern and Variation Pattern>

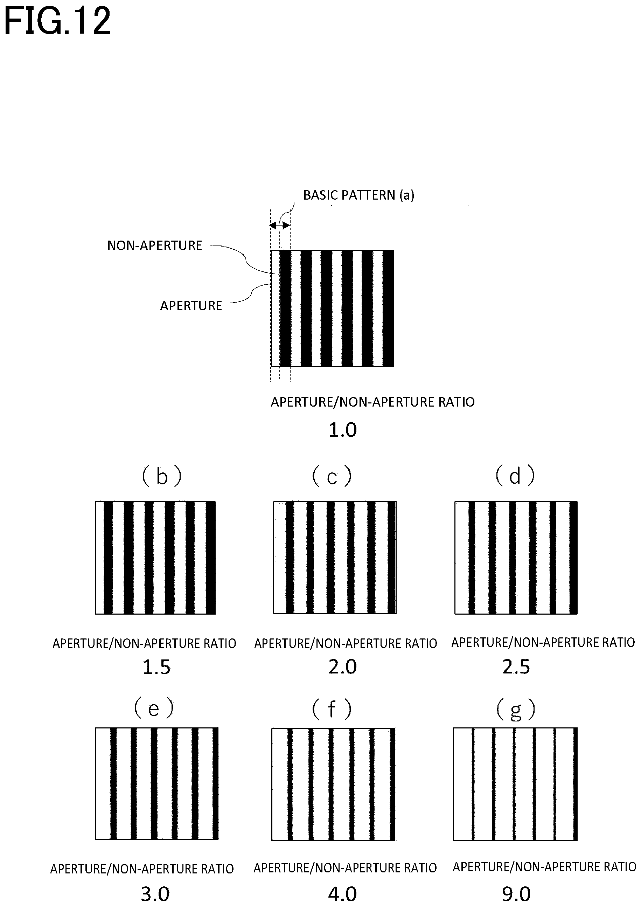

Fig. 12 is a diagram illustrating a basic pattern (first pattern) of a stripe pattern according to the present example and example patterns (second pattern) in which an aperture/non-aperture ratio is changed.

The basic pattern (a) (first pattern) has an aperture/non-aperture ratio of 1.0, and (b) to (g) are patterns (second pattern) having different aperture/non-aperture ratios from 1.5 to 9.0.

<6-2 Examples of Input Image>

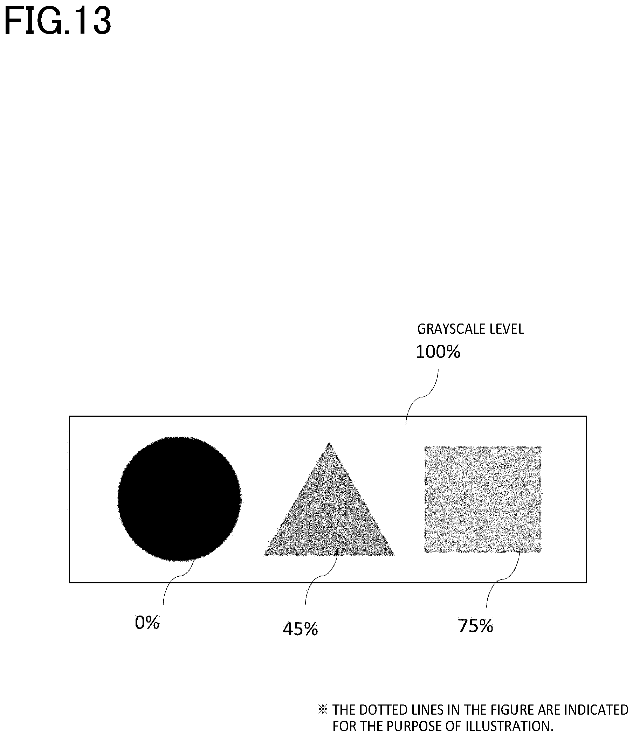

Fig. 13 is a diagram illustrating an example of the input image according to the present example. The input image of Fig. 13 includes figures having different grayscale values, and the respective grayscale values are shown in the figure. These grayscale values are taken as feature values of the input image.

The dotted lines in the figure are indicated for the purpose of illustration of the target images.

<6-3 Selection of Aperture/Non-aperture Ratio of Pattern According to Feature Value of Input Image>

The procedure for generating a moiré-producing pattern includes: 1) specifying a region where the aperture/non-aperture ratio of the pattern is varied; and 2) setting an aperture/non-aperture ratio of the pattern according to the feature value of the pattern.

First, 1) a region where the aperture/non-aperture ratio of the pattern is varied is specified. The simplest way to perform this step is to specify the region according to the contour of the input image. However, the region is not necessarily specified by the contour of the image, and may be appropriately set according to the situation in which the moiré display is used.

In the present example, for the purpose of simplification of the description, Fig. 13 shows the circle, triangle, and rectangle as the regions where the aperture/non-aperture ratio is varied. Then, 2) the aperture/non-aperture ratio of the pattern is set according to the feature value of the pattern. In this step, the aperture/non-aperture ratio of each region is set in view of the "moiré appearance evaluation," which will be described later.

<6-4 Examples of Output Pattern after Changing Aperture/Non-aperture Ratio>

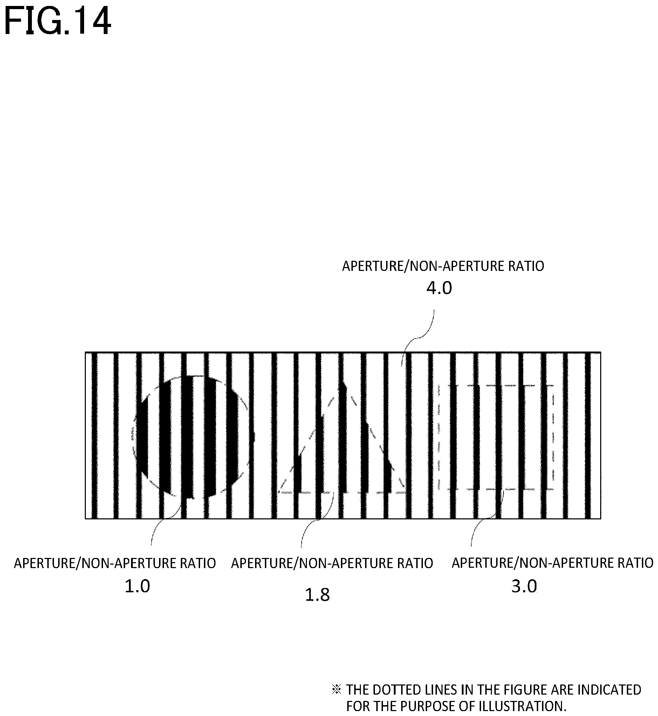

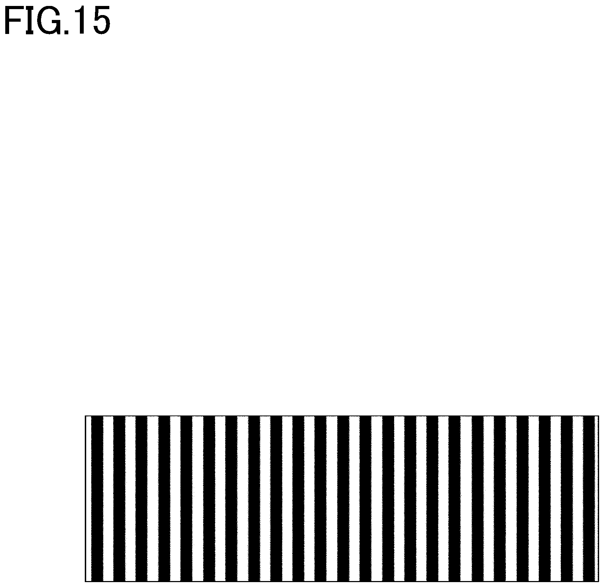

Fig. 14 is a diagram illustrating an example of the front side output pattern. Fig. 15 is a diagram illustrating an example of the rear side output pattern.

In the present example, the aperture/non-aperture ratio in the front side output pattern is varied according to the feature value of the input image, and the aperture/non-aperture ratio in the rear side pattern is constant.

<6-5 Method for Evaluating Moiré Appearance>

The aperture/non-aperture ratio which is selected according to the feature value of the input image can be determined by combining the moiré appearance evaluation, which is performed under the same conditions as those of the situation in which the moiré display is used, and the moiré lightness/darkness evaluation.

For example, the aperture/non-aperture ratios evaluated as being lightest and darkest in the moiré lightness/darkness evaluation can be set as the upper limit and the lower limit, respectively, of the aperture/non-aperture ratio to be selected as the feature value of the input image.

Further, when the lightest and darkest aperture/non-aperture ratios in the moiré lightness/darkness evaluation are set as the upper limit and the lower limit, respectively, the upper limit and the lower limit are preferably selected within the range of the ratios having favorable results in the moiré appearance evaluation (for example, "good" and "fair" when a 3-level evaluation "good-fair-poor" is adopted).

Further the aperture/non-aperture ratios between the upper limit and the lower limit may be distributed linearly, exponentially, logarithmically, gradationally, or in other manners as appropriate.

The methods by which the results of moiré appearance evaluation are reflected are not limited to those described above, and it is also possible to set any upper limit/lower limit, set an intermediate value, and determine the gradation of the aperture/non-aperture ratio in advance based on the moiré lightness/darkness evaluation. It is also possible to use only a part of the appearance evaluation.

<6-6 Specific Examples of Moiré Appearance Evaluation>

Based on the above methods of appearance evaluation, the appearance evaluation of the present example is performed under the following conditions.

Type of pattern: Stripe pattern is used.

Pitch: Pitches are identical between the front side pattern and the rear side pattern.

Aperture/Non-aperture ratio of front side pattern: 1 (1/1) to 9 (9/1)

Aperture/Non-aperture ratio of rear side pattern: Fixed at 1 (1/1)

Configuration: A pattern is printed on two transparent films, which are in turn bonded to both surfaces of a 5-mm thick acrylic plate. The basic viewing distance is 1 m. The pattern and the eyes of the observer are at the same height.

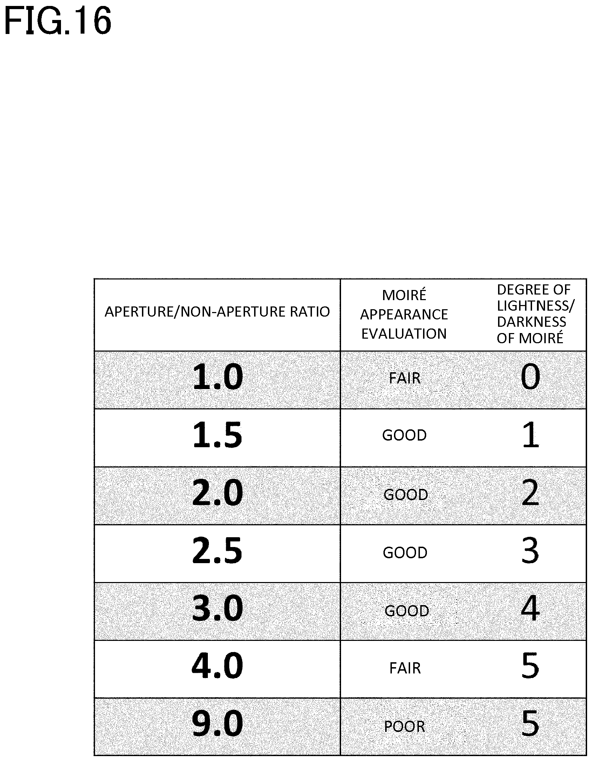

Fig. 16 shows the results of appearance evaluation performed under the conditions described above.

The evaluation is made by two observers. The appearance evaluation is rated by 3-level evaluation (poor, fair, and good: from low to high), and the degree of lightness/darkness is rated by 6-level evaluation (dark:0, 1, ..., 4, 5:light).

In the input image shown in Fig. 13 of the present example, in which the feature value of the input image is a grayscale level, the background has the grayscale level of 100%, and the respective figures from the left have the grayscale levels of 0, 45, and 75%.

In this example, the lower limit of the aperture/non-aperture ratio is set to 1.0 (=1/1), at which the appearance evaluation is "fair," corresponding to the darkest grayscale level of 0%, and the upper limit is set to 4.0 (=8/2), at which the appearance evaluation is "fair."

The aperture/non-aperture ratios between the upper limit and the lower limit vary linearly, and the regions having the grayscale level of 45% and 75% obtain output patterns as shown in Fig. 14 with the aperture/non-aperture ratios of 1.8 and 3.0, respectively.

<6-7 Adjustment of Moiré Density by Changing Aperture/Non-aperture Ratio>

In general, even when the stripe patterns have the identical pitch, the apparent density varies depending on the aperture/non-aperture ratio. Further, in the moiré produced by overlapping the stripe patterns, the strongest moiré appears at the aperture/non-aperture ratio of 5/5, and the moiré becomes weak as the aperture/non-aperture ratio deviates from 5/5. Accordingly, the aperture/non-aperture ratio can be varied to a ratio other than 5/5 to control the density of the moiré for design reasons or for convenience of output. Therefore, one embodiment of the present disclosure is directed to produce a moiré image having a desired density or intensity by changing the aperture/non-aperture ratio of the pattern.

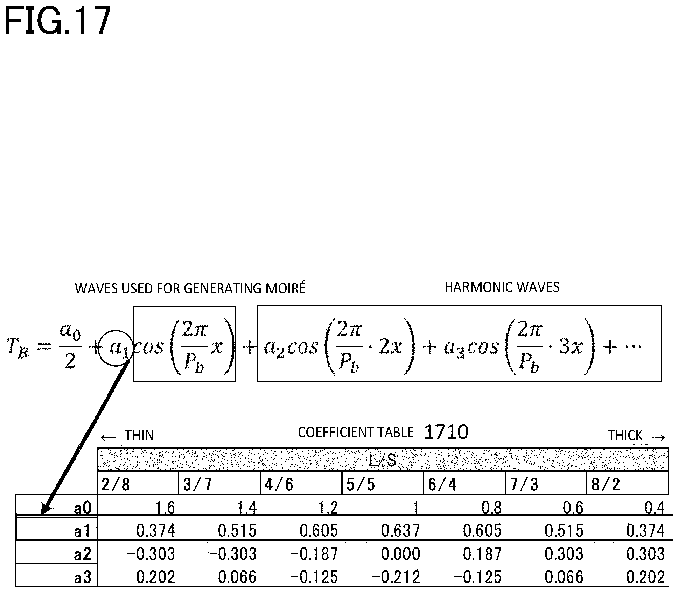

With reference to Figs. 17 to 19, a method for producing a moiré image having a desired density or intensity by changing the aperture/non-aperture ratio of the pattern will be described.

Referring Fig. 17, an intensity of a moiré image according to the present disclosure will be described. Fig. 17 shows a formula 1, which represents a transmittance $T_B$ of the second pattern (for example, rear side pattern) among the first pattern and the second pattern constituting the moiré-producing pattern, and a coefficient table 1710.

When the first pattern is formed of a sine wave having a pitch $P_A$ and the second pattern is formed of a rectangular wave having a pitch $P_B$ in the vicinity of $P_A$, the transmittance $T_B$ of the second pattern is obtained by the following formula 1.

[Math. 1]

$$T_B = \frac{a_0}{2} + a_1 cos\left(\frac{2\pi}{P_b}x\right) + a_2 cos\left(\frac{2\pi}{P_b}2x\right) + a_3 cos\left(\frac{2\pi}{P_b}3x\right) + \cdots$$

In this formula, the coefficients $a_0$, $a_1$, $a_2$, and $a_3$ are different depending on the aperture/non-aperture ratio, and the intensity ratios of the moiré fringe different for each of the coefficients are recorded in the coefficient table. The moiré due to the waves having a pitch closest to that of the first pattern is most easily recognizable (moiré due to the harmonic waves produces a finer fringe, which is less recognizable). In addition, the intensity ratio of the second term becomes a moiré fringe having a different aperture/non-aperture ratio. As shown in the coefficient $a_1$ in the coefficient table, the aperture/non-aperture ratio of 5/5 causes the highest moiré intensity. Accordingly, the intensity of the produced moiré image becomes highest at this aperture/non-aperture ratio, and decreases or increases as the aperture/non-aperture ratio decreases or increases.

<6-7 Density Level Classification>

Although the density of the area ratio of the pattern and the density of the moiré image both contribute to the intensity of the moiré image, the effects due to the respective phenomena may be mixed since they occur concurrently. Accordingly, it is difficult to distinguish whether the intensity of the moiré is mainly due to the density of the area ratio of the pattern or the density of the moiré image. Therefore, in the present disclosure, a desired moiré intensity is obtained by using a density level. The density level refers to a predetermined (quantized) level of density. The density level is determined for each range of different feature values. The use of density levels facilitates moiré being produced from the components (layers or the like) of the pattern at predetermined different densities, which makes it possible to easily adjust the appearance of moiré.

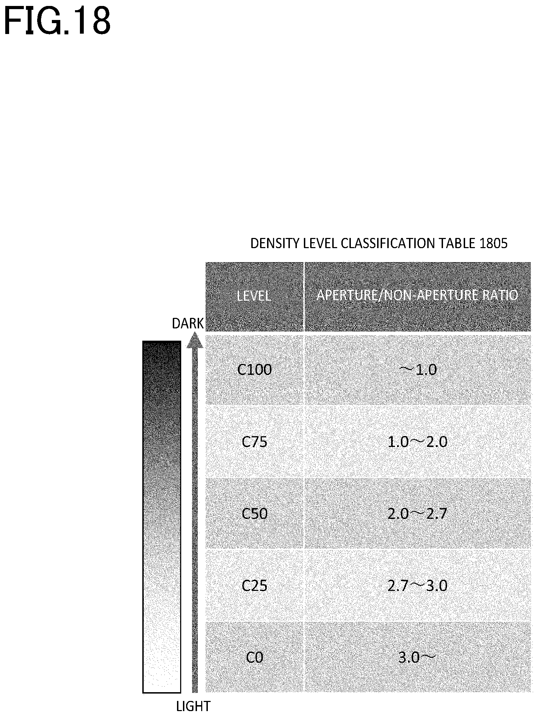

Referring next to Fig. 18, an example of a density level classification table 1805 according to the present disclosure will be described. Fig. 18 shows an example of a density level classification table 1805 according to the present disclosure.

As shown in Fig. 18, the density level classification table 1805 includes level values, ranging from C0 to C100, which represent the density of the image according to the feature value of the image (C0 is lightest and C100 is darkest as shown in Fig. 18), and aperture/non-aperture ratios corresponding to the respective density levels. These level values correspond to values normalized using the maximum and minimum values of the feature value of the input image. For example, in the range from the minimum value to the maximum value of the feature value of the input image, 0 to 20% may be classified as C0, 20 to 40% may be classified as C25, 40 to 60% may be classified as C50, 60 to 80% may be classified as C75, and 80 to 100% may be classified as C100.

In the procedure described later, the aperture/non-aperture ratio may be determined using the density level classification table 1805. Specifically, normalization is performed using the minimum and maximum values of the feature value of the input image to calculate the level value corresponding to the range of the feature value of the input image. Then, the aperture/non-aperture ratio corresponding to the density level of the feature value of the specific region of the input image may be set to an aperture/non-aperture ratio of the second pattern. Accordingly, the moiré of the specific region can be expressed at a predetermined recognizable density.

An example will be described referring to the density level classification table 1805 shown in Fig. 18. When the feature value of the target region in the input image corresponds to the C75 level, the aperture/non-aperture ratio of the second pattern generated from the input image may be set in the range of 1.0 to 2.0. Thus, the use of density levels enables determination of the density (intensity) at which the moiré image is easily recognizable according to the feature value of the input image.

As described above, the use of density levels enables setting of the aperture/non-aperture ratio for each layer according to the feature value corresponding to the density level. For example, when the number of layers included in the input image is smaller than the number of density levels, different layers can be set to have the aperture/non-aperture ratio corresponding to different density levels. When the number of layers is larger than the number of density levels, a plurality of layers can be set to have the aperture/non-aperture ratio corresponding to the same density level.

In addition, when a plurality of layers are set to have the aperture/non-aperture ratio corresponding to the same density level, the aperture/non-aperture ratio of the layer desired to have a higher density in the same density level can be increased so that the depth can be set without deviating from the layer.

<6-8 Method for Adjusting Aperture/Non-aperture ratio>

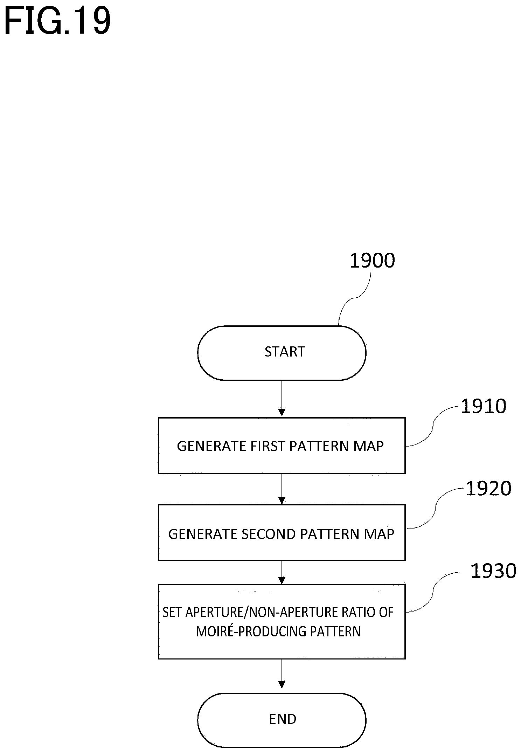

Next, with reference to Fig. 19, an adjustment method 1900 of the aperture/non-aperture ratio according to the present disclosure will be described. Fig. 19 is a flowchart showing the adjustment method 1900 of the aperture/non-aperture ratio according to the present disclosure.

First, in step 1910, a first pattern is generated based on an input image and moiré information specifying the conditions of a moiré-producing pattern. The first pattern described herein is the first pattern (for example, a front side pattern) among the first pattern and the second pattern constituting the moiré-producing pattern, and is generated according to the conditions specified by the moiré information (shape, pitch, orientation, and aperture/non-aperture ratio).

Further, the input image described herein is the image data desired to create moiré, such as a design pattern shown in Fig. 1 or the like. The input image may be an image selected by the user or an image transmitted from a remote external device.

In addition, the moiré information specifying the conditions of a moiré-producing pattern includes information regarding the order of the layers included in the input image (for example, the number of layers, order of layers, and the like), information regarding the basic configuration of the moiré-producing pattern, and information regarding the overall size (expressed by pixels or distances). The information regarding the basic configuration of the moiré-producing pattern described herein includes, for example, information regarding the shape of the moiré-producing pattern (stripe, grid, or the like), the orientation of lines (vertical or oblique), the pitch, or desired sense of depth (depth distance at which moiré of the respective layers is generated), usage of the moiré pattern (material of the plate to which it is bonded, thickness, and observation distance), and the like.

Then, in step 1920, a second pattern specifying a phase shift amount for each region relative to the first pattern is generated according to the feature value of each region in the input image based on the input image and the above moiré information. The second pattern map described herein is the second pattern among the first pattern and the second pattern constituting the moiré-producing pattern, and has the phase shifted from that of the first pattern. The feature value of the input image may vary stepwise in a specific segment. In this case, the phase shift amount also varies stepwise in the segment. This enables smooth movement of the moiré, which often provides a dynamic impression. Further, in this case, unevenness in printing and adverse effects on the moiré pattern can be less noticeable. In particular, the feature value may vary stepwise about a center point in a specific segment in the pattern map.

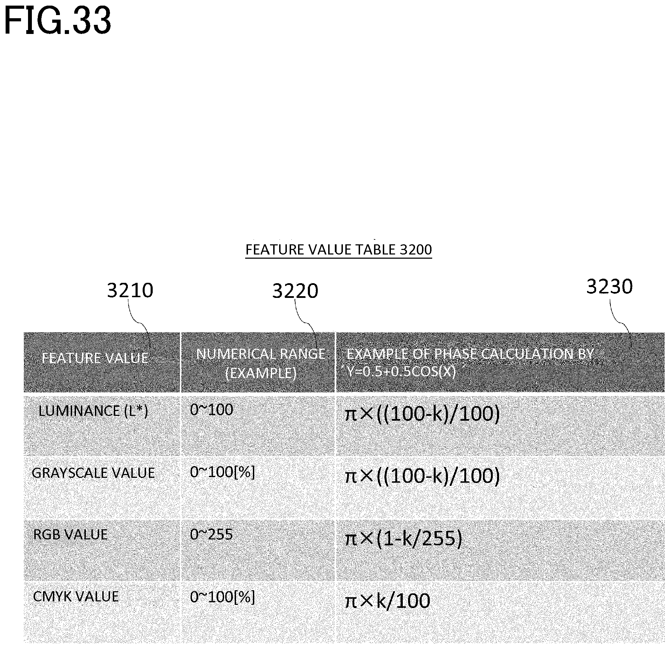

In order to generate the second pattern, for example, a periodic function such as sine or cosine in which the maximum value or minimum value corresponds to the maximum value or minimum value of the luminance value of the pixels may be used. Specifically, the second pattern is generated by shifting each region in the input image by a shift amount, which is calculated by using the formula shown in Fig. 33, described later, according to the feature value (for example, grayscale value).

Then, in step 1930, the aperture/non-aperture ratio of the moiré-producing pattern is set according to the feature value of the input image. The aperture/non-aperture ratio may be set by selecting an appropriate aperture/non-aperture ratio according to the feature value of the input image by using the above density level. For example, an example will be described referring to the density level classification table 1805 shown in Fig. 18. When the feature value of the target region in the input image corresponds to the density level of C100, the aperture/non-aperture ratio may be set in the range of 0.0 to 1.0.

The above description has been given of the method for setting the aperture/non-aperture ratio. However, another embodiment of the present invention is directed to setting the aperture/non-aperture ratio in two stages. This is effective, for example, when the aperture/non-aperture ratio is set in advance (for example, according to the aperture/non-aperture ratio specified by moiré information), and then in a later stage, further adjustment is desired according to the image of the pattern for design reasons or for convenience of output. Accordingly, with the configuration in which the aperture/non-aperture ratio is adjusted in two stages, the aperture/non-aperture ratio can be more flexibly varied according to the image of the pattern.

In addition, since the intensities of the first pattern and the second pattern also depend on the aperture/non-aperture ratio, a moiré intensity R of the first pattern can be calculated using the following formulas 2 and 3, by using the aperture/non-aperture ratio set as described above.

[Math. 2]

When $R_{pow} < 0$

$$R = 1 - \left(1 - \left(0.5 + 0.5 \times cos\left(\frac{2\pi x}{Pitch}\right)\right)\right)^{|R_{pow}|}$$

[Math. 3]

When $R_{pow} \geq 0$

$$R = \left(0.5 + 0.5 \times cos\left(\frac{2\pi x}{Pitch}\right)\right)^{R_{pow}}$$

Similarly, a moiré intensity B of the second pattern can be calculated using the following formulas 4 and 5, by using the aperture/non-aperture ratio set as described above.

[Math. 4]

When $B_{pow} < 0$

$$B = 1 - \left(1 - 0.5 - 0.5 \times cos\left(\frac{2\pi x}{Pitch} + \pi(1 - img2)\right)\right)^{|B_{pow}|}$$

[Math. 5]

When $B_{pow} \geq 0$

$$B = \left(0.5 + 0.5 \times cos\left(\frac{2\pi x}{Pitch} + \pi(1 - img2)\right)\right)^{B_{pow}}$$

where x is the horizontal coordinate of the pixel, and Pitch is the pitch of the basic pattern. $R_{pow}$ and $B_{pow}$ are coefficients determined for the aperture/non-aperture ratio for each layer of the original stripe pattern. The coefficients can be determined from the coefficient table 1.

[Table 1]

| L/S ratio | Ppow, Bpow |
|---|---|
| 0.1 | 16 |
| 0.2 | 9 |
| 0.3 | 4 |
| 0.4 | 2 |
| 0.5 | 1 |
| 0.6 | -2 |
| 0.7 | -4 |
| 0.8 | -9 |
| 0.9 | -16 |

Then, a moiré intensity R2 of the first pattern and a moiré intensity B2 of the second pattern can be calculated from the following formulas 6 and 7, in which the aperture/non-aperture ratio is varied by multiplying the coefficient according to the density by using the moiré intensity R of the first pattern and the moiré intensity B of the second pattern obtained by the above formulas.

[Math. 6]

$$R2 = 1 - 10^{(img2 \times RLTF + 1) \times \log_{10}(1-R)}$$

[Math. 7]

$$B2 = 1 - 10^{(img2 \times BLTF + 1) \times \log_{10}(1-B)}$$

where RLTF is the coefficient representing the degree of contribution from the aperture/non-aperture ratio due to the density in the first pattern, and BLTF is the coefficient representing the degree of contribution from the aperture/non-aperture ratio due to the density in the second pattern.

From the research and verification by the inventors of the present invention, it has been found that desirable result can be obtained when RLTF is 5 and BLTF is 0.0. However, these values are merely examples and can be adjusted as appropriate.

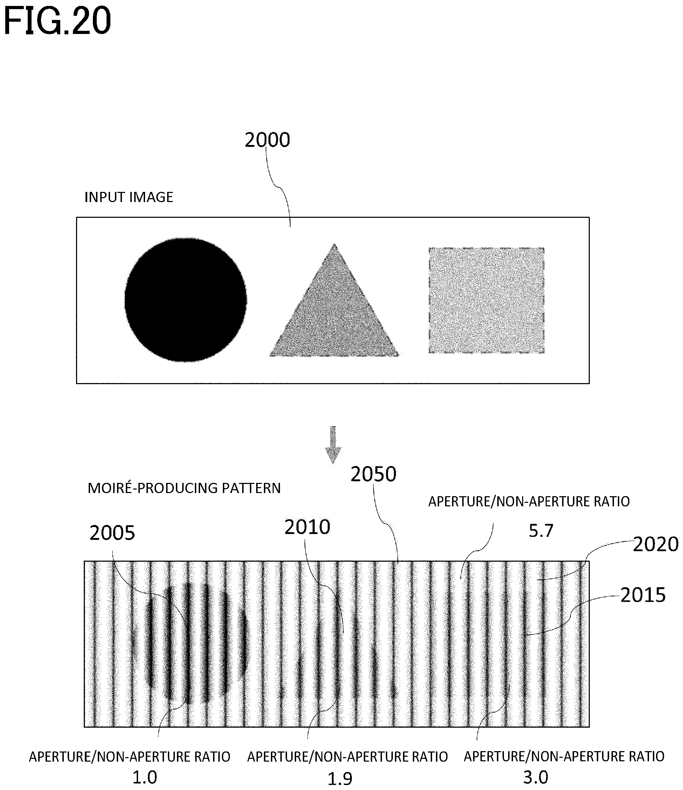

Next, with reference to Fig. 20, an example of the moiré-producing pattern in which the aperture/non-aperture ratio according to the present disclosure is set will be described. Fig. 20 is a diagram illustrating an input image 2000, and a moiré-producing pattern 2050 in which aperture/non-aperture ratios are set corresponding to the input image 2000.

As shown in Fig. 20, when adjustment of the aperture/non-aperture ratio is performed on the input image 2000 including a plurality of layers, the moiré-producing pattern 2050 in which different aperture/non-aperture ratios are set for each of the layers can be obtained. For example, as shown in Fig. 20, the aperture/non-aperture ratio of the layer 2005 (circular region) is set to 1.0, the aperture/non-aperture ratio of the layer 2010 (triangular region) is set to 1.9, the aperture/non-aperture ratio of the layer 2015 (rectangular region) is set to 3.0, and the aperture/non-aperture ratio of the layer 2020 (background) is set to 5.7.

It should be noted that the input image 2000 and the moiré-producing pattern 2050 in which the aperture/non-aperture ratios are set corresponding to the input image 2000 as shown in Fig. 20 are merely examples, and the configuration of the input image 2000 and the values of the aperture/non-aperture ratios are not limited thereto.

<6-9 Method for Calculating Aperture/Non-aperture Ratio>

The above description has been given of the method for adjusting the aperture/non-aperture ratio. However, still another embodiment of the present disclosure is directed to calculating the aperture/non-aperture ratio of a moiré pattern by analyzing printed matter that displays a moiré pattern. For example, when an image is obtained by a camera, a copying machine, or the like, the aperture/non-aperture ratio in the obtained image can be calculated by using a measurement value such as transmittance or reflectance.

Specifically, after an image is obtained, the transmittance and reflectance of the image is analyzed by using appropriate image processing software to extract an average value of the feature value of the image. Then, a region having the feature value of the extracted average value or more is regarded as an aperture, and a region having the feature value of the extracted average value or less is regarded as a non-aperture.

The accuracy of the method calculating the aperture/non-aperture ratio of the moiré pattern depends on the resolution of the obtained image. When the obtained image is 300 dpi or more, preferably approximately 600 dpi, the aperture/non-aperture ratio can be measured without a problem. However, when the resolution of scanning, imaging, or measurement is insufficient to identify the pattern, the pattern information can be corrected or interpolated to be in a state suitable for image analysis. In addition, the correction of the pattern information can be performed on the obtained image itself, or the extracted feature value. For example, an image obtained at 45 dpi can be enlarged to 600 dpi by image processing (bicubic method), and then a feature value can be extracted.

Thus, the aperture/non-aperture ratio of the printed moiré pattern can be calculated by the above method for calculating the aperture/non-aperture ratio of the moiré pattern.

<7-0 Phase Shift Amount>

In order to produce a moiré image by superimposing patterns, it is necessary to associate a feature value of an input image (such as luminance, grayscale value, RGB value, and CMYK value) with a phase shift amount of a phase in one of the patterns. That is, in a pair of stripe patterns constituting a moiré-producing pattern, which are the first pattern and the second pattern, the apparent density can be expressed by shifting a phase of one of the patterns. The phase can be shifted in various manners. In the simplest case, when the feature value of the input image is a grayscale level, the phase shift amount of the phase can be decreased as the grayscale level increases (as the image is closer to white), and the phase shift amount of the phase can be increased as the grayscale level decreases (as the image is closer to black).

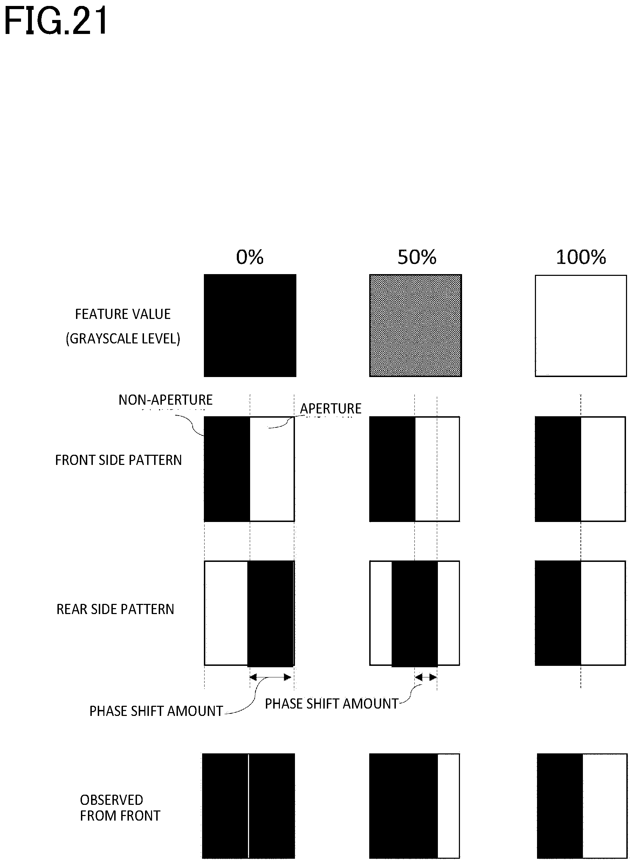

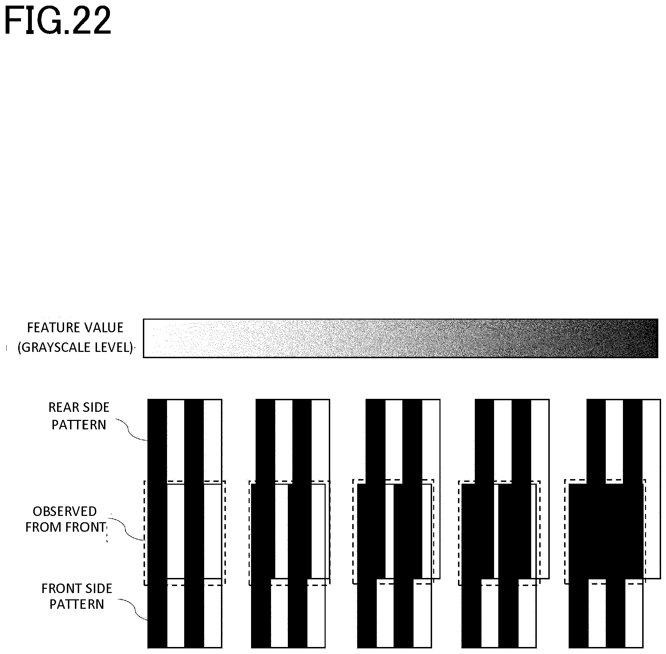

Referring to Figs. 21 and 22, the present example will be described using the cases of (1) the grayscale level 0% (black), (2) the grayscale level 50% (gray), and (3) the grayscale level 100% (white).

In the following description, it is assumed that the front side pattern has an aperture/non-aperture ratio of 1 (the ratio of the aperture and the non-aperture is 1: 1).

Grayscale level 0%: the phase of the pattern is shifted by a half cycle (the non-aperture and the aperture are reversed).

Grayscale level 50%: the phase of the pattern is shifted by a quarter cycle (which corresponds to 50% of the aperture, and the ratio of the non-aperture and the aperture in a superimposed state becomes 3: 1).

Grayscale level 100%: the phase of the pattern is not changed, and the ratio of the non-aperture and the aperture remains 1:1 as in the pattern.

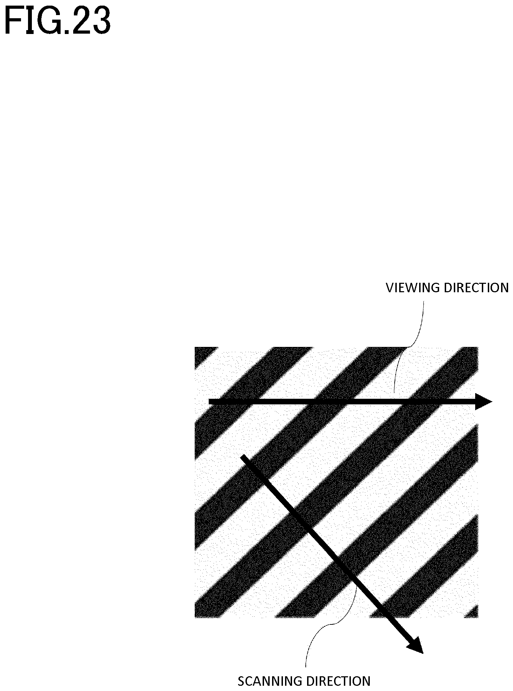

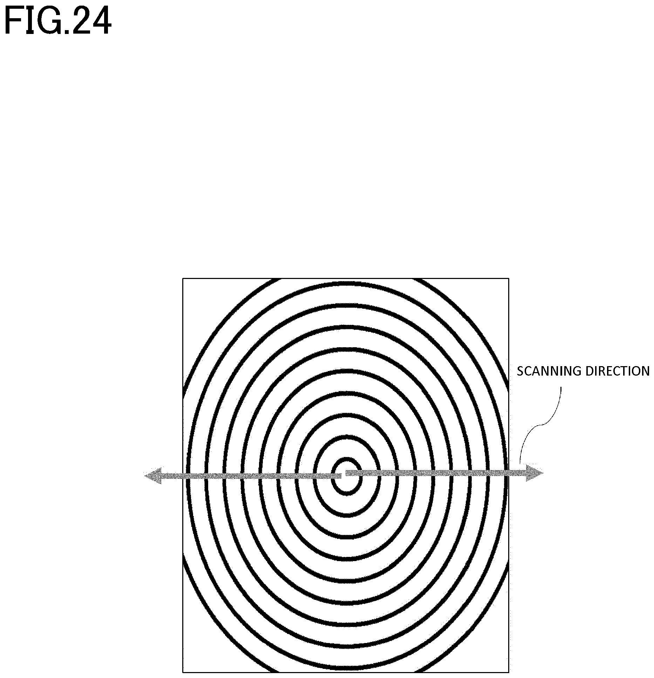

Further, movement of the moiré pattern in a desired direction can be generated by adjusting the direction of shifting the phase. The phase can be shifted by adjusting a distance, a cycle, or a scanning direction of the pitch of the pattern (that is, a direction in which the pattern is repeated), or by adjusting a viewing direction of the observer. With reference to Figs. 23 and 24, an example of a direction of shifting the phase will be described.

Fig. 23 is a diagram illustrating a pattern in which stripes are arranged obliquely. In the example shown in Fig. 23, a pattern has stripes arranged obliquely (for example, at 45 degrees). When the shift amount is the same for the cases where a distance, a cycle, and a pitch of the pattern are shifted, and where the phase is shifted in the viewing direction of the observer, the moving direction and the speed of the pattern are different for the moving direction and the speed of the observer's viewing point.

Fig. 24 is a diagram illustrating a pattern of concentric circles. In the present disclosure, the phase of the pattern may not be necessarily shifted in a constant direction in one article, and may be shifted in different directions. For example, in the case of a pattern of concentric circles shown in Fig. 24, the phase can be shifted in directions reversed at the center of the circles to thereby realize a complex movement as the observer's viewpoint moves.

As shown in Figs. 23 and 24, the design of moiré can be improved by adjusting the direction of shifting the phase.

<7-1 Method for Determining Phase Shift Amount>

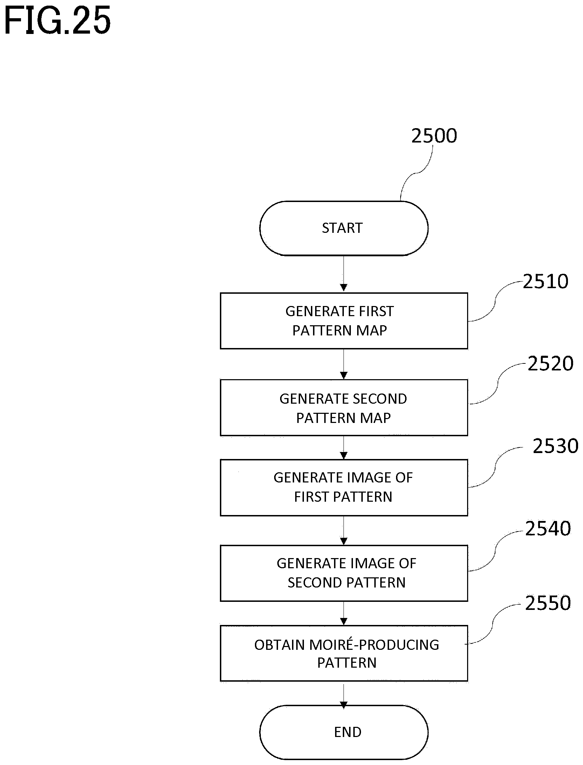

Next, with reference to Fig. 25, a method for determining a phase shift amount according to the present disclosure will be described. Fig. 25 is a view showing a method 2500 for determining a phase shift amount according to the present disclosure.

First, in step 2510, a first pattern map on which a first pattern is based is generated, the first pattern map being represented by using an intensity of density for each of pixels based on an input image and moiré information specifying the conditions of the moiré-producing pattern. The input image described herein is the image data desired to create moiré, such as a design pattern shown in Fig. 1 or the like. The input image may be an image selected by the user or an image transmitted from a remote external device.

In addition, the moiré information specifying the conditions of a moiré-producing pattern includes information regarding the order of the layers included in the input image (for example, the number of layers, order of layers, and the like), information regarding the basic configuration of the moiré-producing pattern, and information regarding the overall size (expressed by pixels or distances). The information regarding the basic configuration of the moiré-producing pattern described herein includes, for example, information regarding the shape of the moiré-producing pattern (stripe, grid, or the like), the orientation of lines (vertical or oblique), the pitch, or desired sense of depth (depth distance at which moiré of the respective layers is generated), usage of the moiré pattern (material of the plate to which it is bonded, thickness, and observation distance), and the like.

Based on the above input image and moiré information, a first pattern map represented by using the intensity of density of pixels is generated. The first pattern map is represented by values indicating the intensity of pixels of a stripe drawn in the first pattern among the first and second patterns constituting the moiré-producing pattern.

A specific procedure for generating a first pattern map will be described below.

First, an input image is converted into data such as a bitmap or a grayscale 8-bit image. The grayscale density of the bitmap data corresponds to "img" in formula 8 described later. Further, at this stage, a sense of depth of moiré can be enhanced by adjusting the contrast of image (by making a light region lighter or making a dark region darker). When the input image is a color image, it is desirable to perform grayscale conversion while maintaining lightness.

The number of pixels of the bitmap data corresponds to the size of a resultant moiré-producing pattern. When the size of the moiré-producing pattern desired to be finally obtained is different from the input image, the size of the input image can be adjusted at this stage.

Then, the shape, pitch, aperture/non-aperture ratio, and the like of the first pattern are set according to the moiré information described above. Although any aperture/non-aperture ratio can be set, the aperture/non-aperture ratio is desirably 5/5 in order to produce strong moiré.

Then, the grayscale luminance of each pixel in the bitmap represented by values of 0 to 255 is normalized by the following formula 8.

[Math. 8]

$$img2 = \frac{img}{255}$$

where img represents the grayscale luminance value of each pixel in the bitmap data, and img2 represents the normalized grayscale luminance value of the pixel.

Then, the intensity of the first pattern map is calculated by the following formula 9.

[Math. 9]

$$R = 0.5 + 0.5 \times \cos\left(\frac{2\pi x}{Pitch}\right)$$

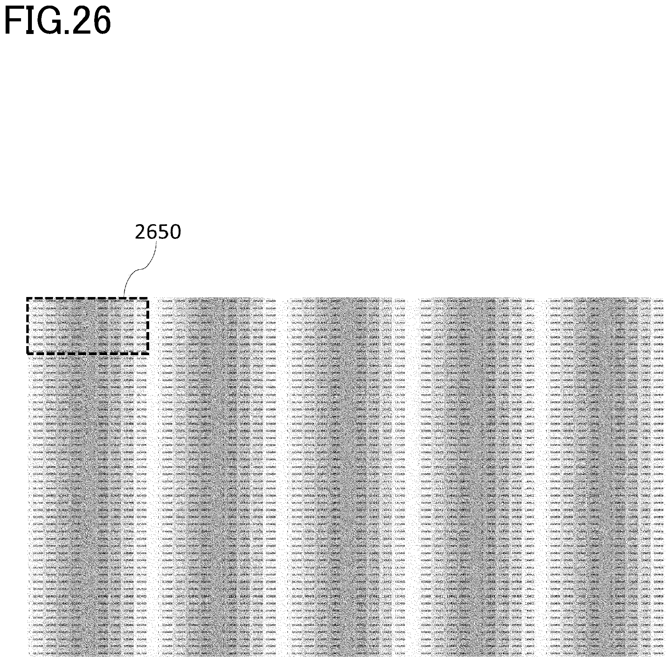

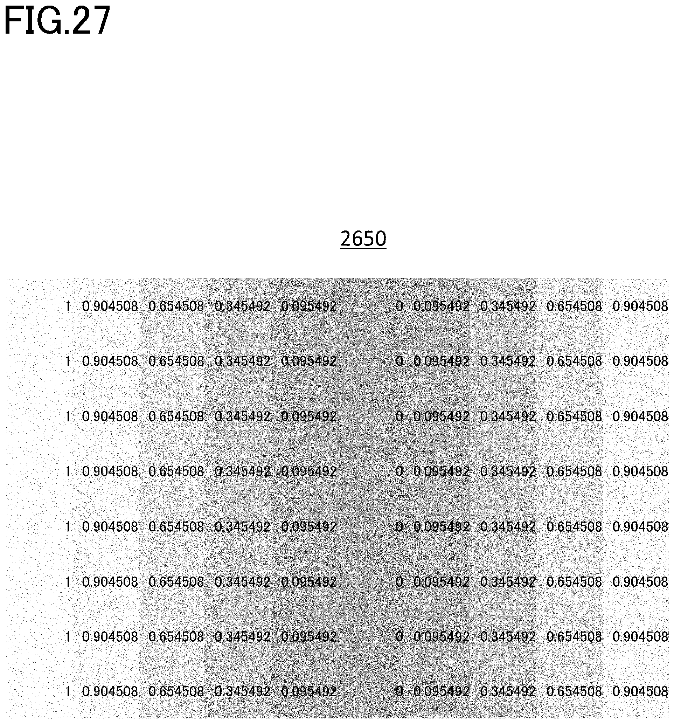

where x is the horizontal coordinate of the pixel, and R represents the intensity of the target pixel in the first pattern map. The above procedure is performed for all the pixels to thereby generate the first pattern map shown in Fig. 26. Fig. 26 shows the intensities of the respective pixels by means of density and numerical values. Since the numerical values are not shown in detail in Fig. 26, an enlarged view of a portion 2650 of a region of the first pattern map of Fig. 26 is shown in Fig. 27. As shown in Fig. 27, each cell of the first pattern map represents the grayscale luminance value of the corresponding pixel of the input image. The luminance value of the cell corresponding to the darkest pixel is 0, and the luminance value of the cell corresponding to the lightest pixel is 1.

Then, in step 2520, a second pattern map on which a second pattern is based is generated, the second pattern map being represented by using an intensity, and specifying a phase shift amount for each region relative to the first pattern according to the feature value of each region in the input image based on the input image and moiré information described above. The second pattern map is a value map represented by values indicating the intensity of pixels of a stripe drawn in the second pattern among the first and second patterns constituting the moiré-producing pattern, and having the phase shifted from the first pattern.

A specific procedure for generating a second pattern map will be described below.

First, similarly to the first pattern map, the input image is converted into data such as a bitmap or a grayscale 8-bit image, normalized by formula 1, and adjusted in size and contrast. Then, the pitch of the second pattern is determined based on the pitch set for the first pattern, the order of layers included in the input image, and the specified desired depth distance. Here, the depth level described later may be used.

Then, the intensity of the second pattern map is calculated by the following formula 10.

[Math. 10]

$$B = 0.5 + 0.5 \times \cos\left[\left(\frac{2\pi x}{Pitch}\right) + \pi(1 - img2)\right]$$

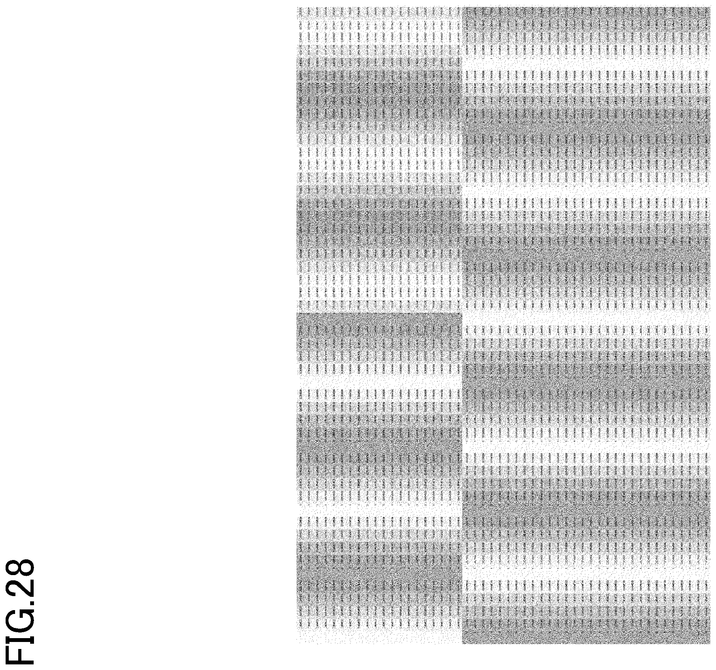

where x is the horizontal coordinate of the pixel, and B represents the intensity of the target pixel in the second pattern map. The above procedure is performed for all the pixels to thereby generate the second pattern map shown in Fig. 28. Fig. 28 shows the intensities of the respective pixels by means of density and numerical values as in Fig. 26. However, as in Fig. 26, the numerical values are not shown in detail in Fig. 28.

Although the above description is given by using the above formula 10 as an example of formula for shifting the phase, the present disclosure is not limited to formula 10, and any periodic function may be used.

Then, in step 2530, an image of the first pattern is generated from the first pattern map. Specifically, an image of the first pattern may be generated by assigning the intensities of pixels indicated in the first pattern map to values of 0 to 255 by the following formula 11, and the results may be outputted as a bitmap image.

[Math. 11]

$$R' = R \times 255$$

Then, in step 2540, an image of the second pattern is generated from the second pattern map. Specifically, an image of the second pattern may be generated by assigning the intensities of pixels indicated in the second pattern map to values of 0 to 255 by the following formula 12, and the results may be outputted as a bitmap image.

[Math. 12]

$$B' = B \times 255$$

When the input image includes a plurality of layers, and a different depth level is set for each layer, the above steps 2510, 2520, 2530, and 2540 need to be repeated for each pitch. Then, target regions are extracted from the images of the plurality of patterns corresponding to the respective pitches, and synthesized as one image.

At this stage, in order to make the synthesized image more natural and enhance the moiré effect, an overlap region in the synthesized image can be blurred. For example, the transmittance of the pattern located on the front side in the overlap region can be decreased to enhance the overlapping effect and stereoscopic effect of the moiré. Similarly, when the patterns are synthesized, the transmittance of one or both of the patterns in a region extended around the overlap region can be decreased to enhance overlapping effect and stereoscopic effect of the patterns.

After the image of the first pattern and the image of the second pattern are generated, the respective pattern maps are printed. In order to ensure the intensities of the patterns are correctly displayed on printed matter, the values obtained by the above formula are desirably converted into the lightness values (L*values) that are used in actual printing. This procedure may use a function or a matrix. For instance, the function may be a monotonically decreasing function, a monotonically increasing function, or the like. Further, the matrix may be a real matrix, integer matrix, or the like.

At this stage, the stereoscopic effect of the moiré can be enhanced, for example, by extending each region in the pattern map, or decreasing the translucency of the region on the front side layer.

Moreover, in printing of the image of the first pattern map and the image of the second pattern map, adjustment (binarization, halftone, or contrast adjustment) can be performed in accordance with a printing method or a printing machine to thereby obtain a pattern with high quality.

The printing method may be ink jet printing, gravure printing, offset printing, offset gravure printing, or screen printing.

Further, ink used in printing may be ink jet ink, gravure ink, offset ink, offset gravure ink, or screen ink in accordance with the printing method. The type of ink may be a pigment ink or a dye ink. Further, the type of ink may be a fluorescent ink or a phosphorescent ink. The type of the fluorescent ink or the phosphorescent ink may be a pigment ink or a dye ink. The number of print colors may be from one to eight.

Next, in step 2550, a moiré-producing pattern is obtained from the image of the first pattern and the image of the second pattern. Specifically, as described above, this may include superimposing a display on which the first pattern is printed and a display on which the second pattern is printed with a predetermined distance (gap) therebetween. Accordingly, a moiré-producing pattern for generating moiré according to the input image and the moiré information can be obtained.

<7-2 Periodic Function for Calculating Phase Shift>

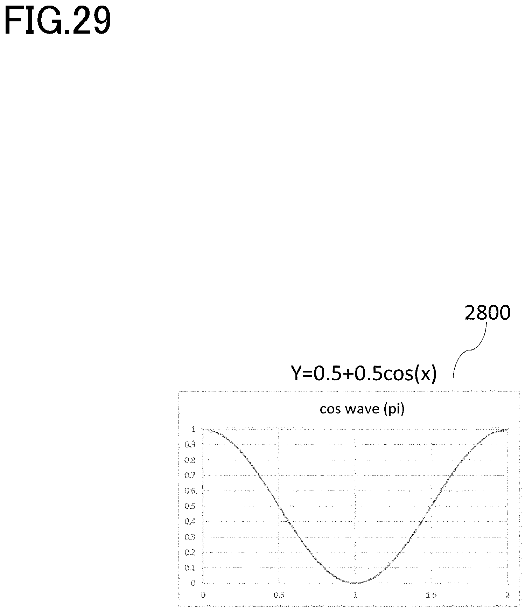

Next, with reference to Fig. 29, a periodic function used for determining a phase shift amount according to the present disclosure will be described. Fig. 29 shows an example of the periodic function used for determining a phase shift amount according to the present disclosure.

As described above, in the present disclosure, a formula using a periodic function is used to shift the second pattern. According to this periodic function, basically, the maximum value or minimum value corresponds to the maximum value or minimum value of the luminance value of the pixels, and, when the feature value of the input image is a grayscale level, the phase shift amount decreases as the grayscale level increases (as the image is closer to white), and the phase shift amount increases as the grayscale level decreases (as the image is closer to black). The periodic function may be, for example, a sine curve (including a sine wave and a cosine wave), a cosine curve, a triangular wave, a sawtooth wave, or a rectangular wave.

In general, with a stripe pattern represented by a rectangular wave, the moiré image appears most clearly with a high sense of depth. However, when the viewpoint of the observer viewing the moiré moves, the fluctuation of moiré appears strongly and may cause flickering since the pitch depends on the print resolution or image resolution.

On the other hand, with a stripe pattern represented by a sine curve, the moiré image is not as clear as that of a rectangular wave. However, when the viewpoint of the observer viewing the moiré moves, the moiré fluctuates naturally and smoothly. Accordingly, in practice, in order to produce a strong and natural moiré image, a sine curve close to a rectangular wave is desirably used. However, the periodic function described herein is not limited to these, and a periodic function may be selected as appropriate according to the design of moiré (for example, a rectangular wave is used when it is desired to use a flickering effect as a design).

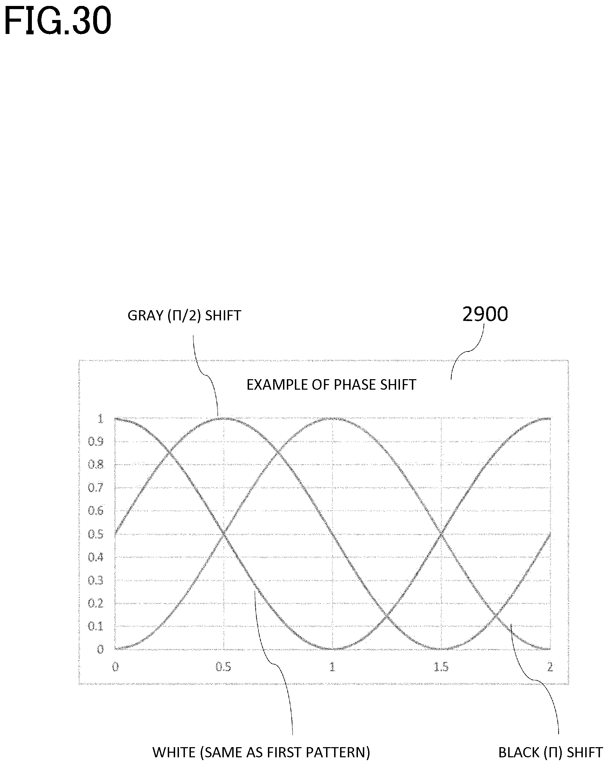

For example, when the first pattern is drawn by a sine curve 2800 as shown in Fig. 29, the second pattern corresponding to the first pattern is a sine curve 2900 shown in Fig. 30, which is shifted in phase by π. Since the shift amount reaches a maximum when the pattern is reversed, a shift of half the cycle (i.e., π) is a maximum value.

For example, when the feature value of the input image is a grayscale level, a white region has no shift (that is, is the same as the first pattern), a gray region has a shift of π/2, and a black region has a shift of π. Specifically, when the grayscale value is used as the feature value, a phase shift amount is obtained by the following formula 13.

[Math. 13]

$$S = \pi \times \frac{(100-k)}{100}$$

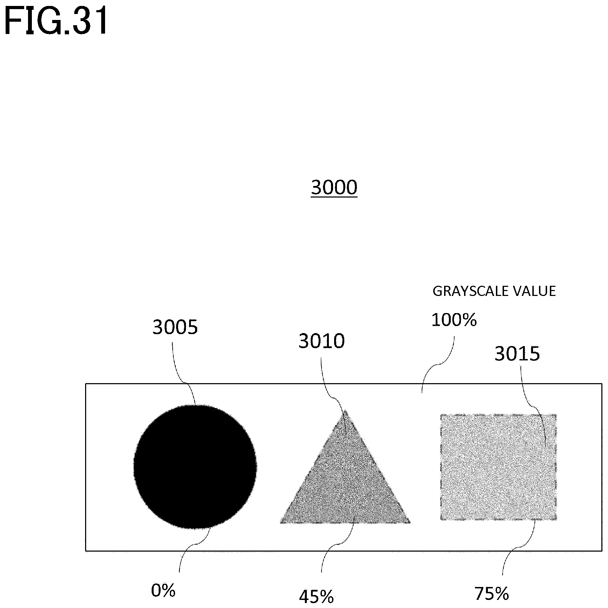

where S is a phase shift amount, k is the feature value of the image normalized in a range of 0 to 100 (in this case, a grayscale value, for example). For example, when an image 3000 shown in Fig. 31 is an input image, in which a circular region 3005 has a grayscale value of 0%, a triangular region 3010 has a grayscale value of 45%, and a rectangular region 3015 has a grayscale value of 75%, the circular region 3005 has a phase shift amount of π, the triangular region 3010 has a phase shift amount of (11π)/20, and the rectangular region 3015 has a phase shift amount of (π/4).

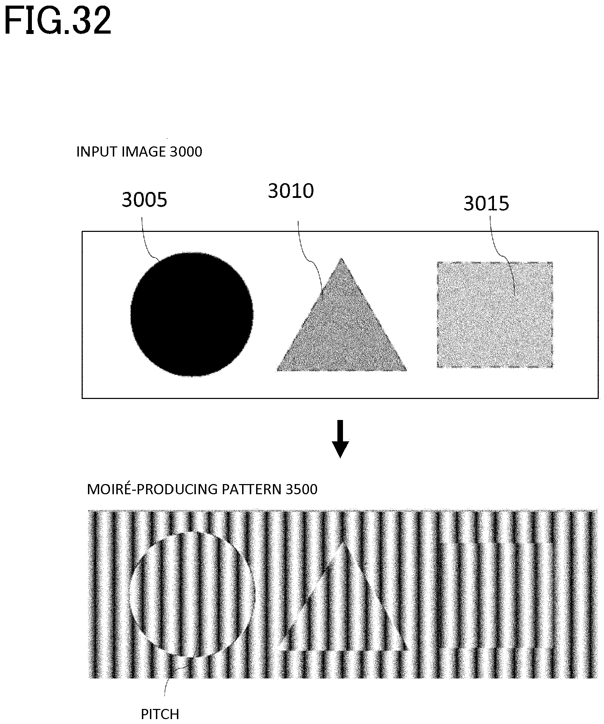

Fig. 32 shows the input image 3000 and a moiré-producing pattern 3500 generated from the input image. Fig. 32 is a diagram illustrating an example of a moiré-producing pattern generated by shifting a phase of the input image shown in Fig. 31 according to a feature value. As shown in Fig. 32, the phase amounts for the regions 3005, 3010, and 3015 are calculated according to the grayscale values in the input image, and the results are shown in the moiré-producing pattern 3500.

<7-3 Calculation of Phase Shift Amount for Each Feature Value>

In the above description, the case where the feature value of the input image is a grayscale value has been described. However, the present invention is not limited thereto, and a luminance value, RGB value, CMYK value, or the like may be used as a feature value. However, since the magnitude of numerical value or apparent density may vary depending on the feature value, methods for calculating a phase shift amount may be different.

Fig. 33 shows a feature value table 3200 which indicates typical methods of calculating a feature value. The feature value table 3200 of Fig. 33 shows the numerical range 3220 and the phase shift amount calculation formula 3230 corresponding to each type of the feature value 3210. Accordingly, referring to the feature value table 3200, the formula for calculating the phase shift amount can be selected according to the type of the feature value for each region in the input image.

The feature values shown in Fig. 33 are merely examples, and other feature values can also be used. Similarly, in the cases of other feature values, when lightness increases as the numerical value of the feature value increases, the ratio between the difference from the maximum value to the feature value, to the width of the numerical range of the feature value, basically corresponds to the phase shift amount. On the other hand, when lightness decreases as the numerical value of the feature value decreases, the amount of the feature value to the numerical range of the feature value corresponds to the phase shift amount.

As described above, determining the density expression in the overlap region is possible by determining the phase shift amount to the aperture according to the grayscale level of the pattern.

In the above example, the phase shift amount to the aperture assumes a linear form. However, a non-linear form such as an exponential/logarithmic form, or a gradational form may also be used.

Furthermore, the phase can be shifted in the front side pattern or both patterns. Since the front side pattern has a significant influence on the design, the phase in the rear side pattern is preferably shifted according to the feature value of the input image while the pattern remains the same in the front side pattern in order to improve the appearance.

<8-1 Determination of Phase Shift Amount of Pitch>

In the configuration in which the first pattern (front side) and the second pattern (rear side) are disposed with a gap therebetween, moiré that occurs due to binocular parallax is perceived stereoscopically.

When the rear side pattern has a larger pitch than the front side pattern, moiré appears to project forward, and when the rear side pattern has a smaller pitch, moiré appears to be recessed backward.

The degree of sense of depth of the pattern (appearance of being recessed from the pattern) and the degree of sense of projection (appearance of projecting from the pattern) depend on the ratio of pitches between the front side pattern and the rear side pattern, installation conditions of the pattern (refractive index, or thickness of a substrate or panels to be bonded), and the like.

For example, if patterns are bonded to the front surface and the rear surface of a 5 mm-thick acrylic plate, when a ratio between a pitch of the front side pattern and a pitch of the rear side pattern is in a range of 95% to 99.9%, a sense of depth is perceived, and when the ratio is in a range of 98 to 99.5%, a stronger sense of depth is perceived.

Further, when the ratio is in a range of 100.3 to 105.0%, a sense of projection is perceived, and when the ratio is in a range of 100.3 to 102.0%, a stronger sense of projection id perceived.

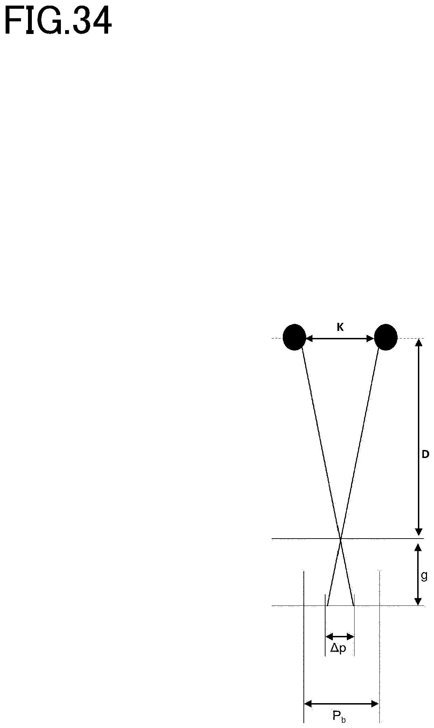

Therefore, a depth distance (that is, amount of depth) at which moiré occurs can be set by appropriately adjusting the pitch. With reference to Figs. 34 to 36, the principle of this adjustment will be described below.

The acrylic plate may be a glass plate, a polycarbonate plate, vinyl chloride plate, or a PET plate. Other transparent plates may also be used as the acrylic plate. The acrylic plate may have a thickness of, for example, 1 mm or more and 30 mm or less.

The acrylic plate may have a longitudinal size of 1 mm or more and 10 m or less. The acrylic plate may have an outer shape such as a square, rectangle, circle, oval, or free curve. The outer shape formed by a free curve may be a shape similar to a moiré image. A surface to which the acrylic plate is bonded may be a flat or curved surface. Further, the acrylic plate may have a deviation within 5% at 5 points of the center and the edges.

Figs. 34 to 36 are views illustrating examples of an optical configuration for generating moiré.

As described above, due to binocular parallax, moiré is perceived stereoscopically by the observer. Specifically, a deviation $\Delta p$ between the positions viewed by the right eye and the left eye on the rear side pattern is obtained by the following formula 14.

[Math. 14]

$$\Delta \mathrm{p} = \frac{gK}{D}$$

As shown in Fig. 34, D is a viewing distance (distance between the observer and the moiré-producing pattern), g is a gap between the patterns (gap between the first pattern (front side) and the second pattern (rear side)), and K is an interocular distance.

Further, a pitch $P_a{}'$ of the moiré pattern generated on the rear side pattern is obtained by the following formula 15.

[Math. 15]

$$P_a' = P_a + 2\left( g\tan\left( \sin^{-1}\left( \frac{n_1}{n_2}\sin\left( \tan^{-1}\frac{P}{2D} \right) \right) \right) \right)$$

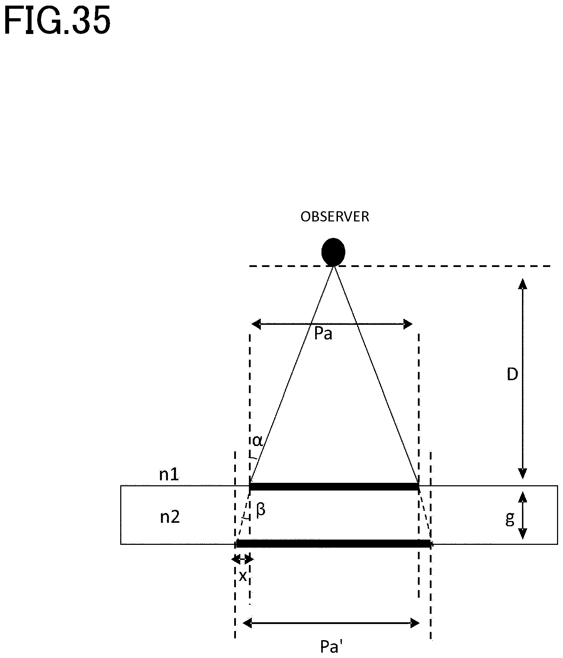

As shown in Fig. 35, $P_a$ is a pitch of the front side pattern, $n_1$ is a refractive index of the front side pattern from a viewing position (for example, 1 in the case of air), $n_2$ is a refractive index of the rear side pattern from the front side pattern (for example, 1.49 in the case of air).

Similarly, a pitch $P_d$ of the moiré pattern generated on the rear side pattern is obtained by the following formula 16.

[Math. 16]

$$P_d = \frac{1}{\left| \frac{1}{P_a'} - \frac{1}{P_b} \right|} = \frac{P_a' P_b}{|P_a' - P_b|}$$

where $P_b$ is a pitch of the rear side pattern.

Then, from the relationship of the pitches obtained by the above formulas 14 to 16, a binocular parallax (that is, a shift amount of moiré pattern) x is obtained by the following formula 17.

[Math. 17]

$$x = \frac{\Delta p}{P_b} p_d$$

Further, a depth distance (an amount projecting forward) $S_F$ at which the moiré pattern appears to project and a depth distance $S_B$ at which the moiré pattern appears to be recessed are obtained by the following formulas 18 and 19.

[Math. 18]

$$S_F = \frac{x_F D}{K + x_F}$$

[Math. 19]

$$S_B = \frac{x_B D}{K - x_B}$$

where $X_F$ represents the parallax when the moiré pattern appears to project, and $X_B$ represents the parallax when the moiré pattern appears to be recessed.

Further, when the above formulas are rearranged by substitution, the depth distance $S_F$ at which the moiré pattern appears to project and the depth distance $S_B$ at which the moiré pattern appears to be recessed can be expressed by the following formulas 20 and 21, which use the viewing distance, the gap between the patterns, and the pitch of the moiré pattern.

[Math. 20]

$$S_F = \frac{gDP_d}{P_b D + gP_d}$$

[Math. 21]

$$S_B = \frac{gDP_d}{P_b D - gP_d}$$

According to the above formulas, the depth of moiré can be calculated from the pitch of each pattern and configuration conditions such as the viewing distance D, the gap g between the patterns, and the refractive indices $n_1$ and $n_2$.

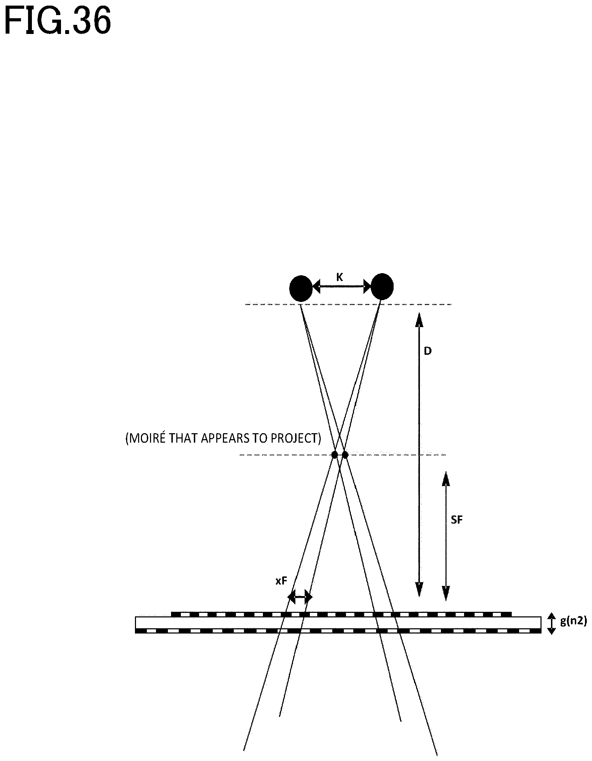

Fig. 35 shows an example optical configuration of moiré that appears to project, and Fig. 36 shows an example optical configuration of moiré that appears to be recessed.

When the above configuration conditions (D, g, $n_1$, $n_2$) and the pitch of one of the patterns (for example, the pitch $P_a$ of the front side pattern) are determined, the pitch required to generate moiré at a specific depth distance can be calculated by the same principle. Specifically, the pitch required to generate moiré that appears to project can be calculated by the following formula 22, and the pitch required to generate moiré that appears to be recessed can be calculated by the following formula 23.

[Math. 22]

$$P_b = P'_a \left( 1 + g \frac{D - S_F}{S_F D} \right)$$

[Math. 23]

$$P_b = P'_a \left( 1 - g \frac{D - S_B}{S_B D} \right)$$

Accordingly, a pitch for generating moiré at a desired depth can be calculated by the above formulas, and a pattern having such a pitch can be prepared. Thus, stereoscopic moiré can be generated. However, in order to obtain a sense of depth due to the pitch, it is important to visually observe a moiré fringe and visually track the movement of moiré fringe during observation. When a moiré fringe cannot be seen, the observer cannot perceive a sense of depth of the moiré.

Examples of the situation in which a moiré fringe cannot be clearly seen include the cases where, for example, when the front side pattern is projected onto the rear side pattern, the front side pattern completely coincides with the rear side pattern (the pitch of moiré fringe is infinite in calculation), the pitch of moiré fringe is too large (when the viewpoint moves, the moiré fringe does not appear to move), the pitch of moiré fringe is too small (pattern cannot be visually observed), and the pitch of moiré fringe is too weak (aperture/non-aperture ratio is extreme, contrast of pattern drawing line is low, or transmittance is too high).

<8-2 Depth Levels>

The above description has been given of the method for calculating a pitch for generating moiré at a desired depth level. However, in practice, depending on the visual acuity of the observer or the pattern produced, the depth distance intended by the calculated pitch is not always perceived by the observer. For example, when the observer does not have equal visual acuity in both eyes, or the pattern is not prepared with the calculated pitch due to printing error, moiré may not appear at the intended depth distance. Particularly, in preparation of the pattern, lines may expand depending on the output method such as printing, pitch may be shifted, or error may occur depending on the output resolution. In such cases, it is difficult to precisely produce the pattern as calculated and thus the same depth distance is not likely to be perceived by every observer.

Therefore, in the present disclosure, a "depth level" based on the calculated depth distance is used to enable the same sense of depth being perceived by every observer and facilitate production of the pattern. The depth level refers to a segment having a predetermined (quantized) depth distance that produces moiré. The depth level is determined for each range of different pitches. The use of depth levels causes moiré produced by respective components (such as layers) of the pattern to be generated at different predetermined depth distances. Therefore, although the perceived depth distance is different depending on the observer, the order in the depth direction does not vary, and the depth effect can be achieved.

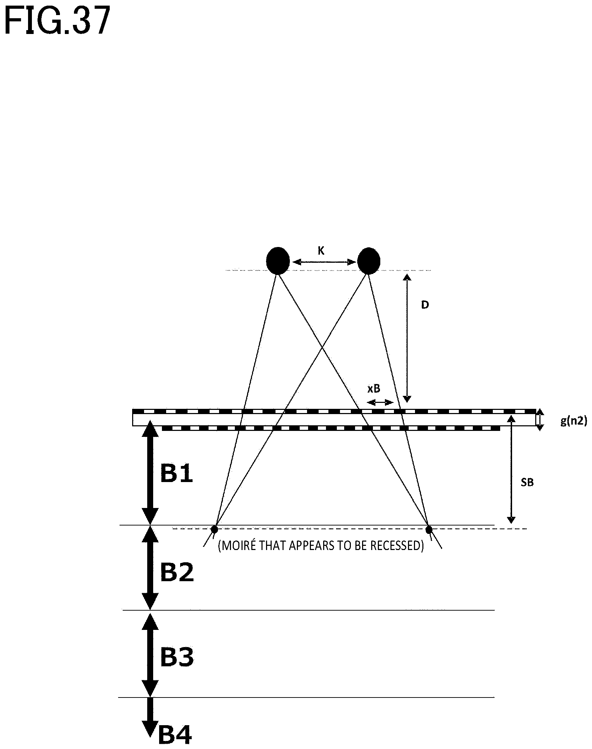

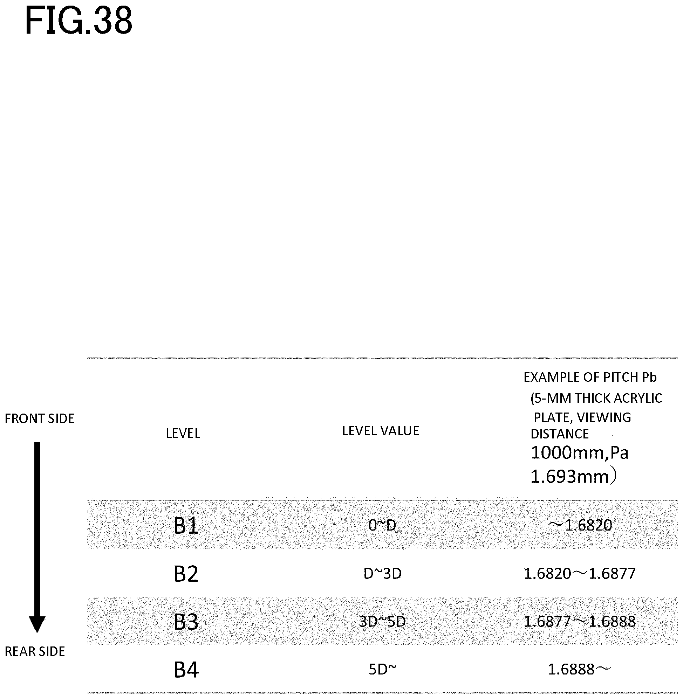

With reference to Figs. 37 and 38, an example of depth levels for making moiré appear to be recessed will be described. Figs. 37 and 38 are views illustrating an example of depth levels for making moiré appear to be recessed. As shown in Fig. 37, the depth level includes a plurality of levels B1, B2, B3, and B4. These depth levels represent depth distances at which the pattern appears to be recessed from the panel, and the depth distance increases from B1 to B4 (that is, B1 corresponds to the smallest depth distance, and B4 corresponds to the largest depth distance).

Further, as shown in Fig. 38, a level value representing a depth distance at which the pattern appears to be recessed, which is expressed as a multiple of the viewing distance D, and a range of pitch $P_b$ of the rear side pattern for generating moiré at the corresponding depth distance, are defined for each level. In addition, the ranges of pitch shown in Fig. 38 are calculated under the conditions that the acrylic plate has a thickness of 5 mm, a viewing distance is 1000 mm, and a pitch of the front side pattern is 1.693 mm.

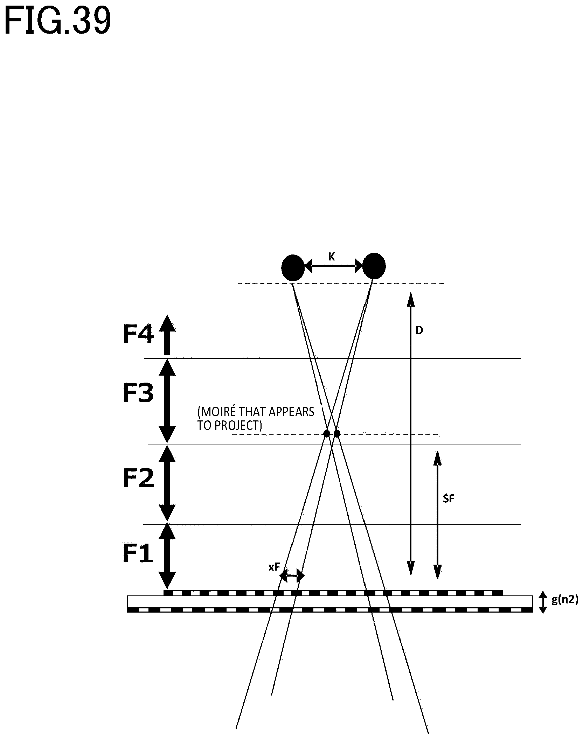

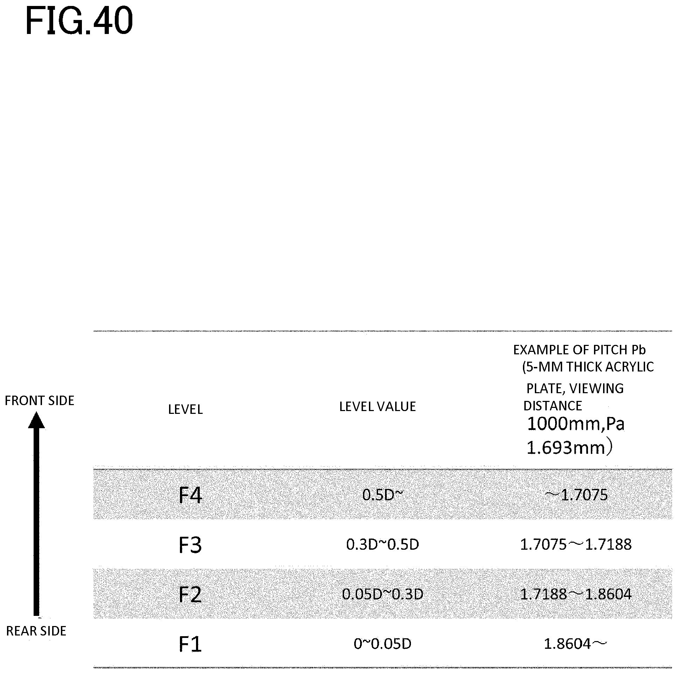

With reference to Figs. 39 and 40, an example of depth levels for making moiré appear to project will be described. Figs. 39 and 40 are views illustrating an example of depth levels for making moiré appear to project. As shown in Fig. 39, the depth level includes a plurality of levels F1, F2, F3, and F4. These levels represent depth distances at which the pattern appears to project from the panel, and the depth distance increases from F4 to F1 (that is, F4 corresponds to the smallest depth distance, and F1 corresponds to the largest depth distance).

Further, as shown in Fig. 40, a level value representing a depth distance at which the pattern appears to project, which is expressed as a multiple of the viewing distance D, and a range of pitch $P_b$ of the rear side pattern for generating moiré at the corresponding depth distance are defined for each level. In addition, the ranges of pitch shown in Fig. 39 are calculated under the conditions that the acrylic plate has a thickness of 5 mm, a viewing distance is 1000 mm, and a pitch of the front side pattern is 1.693 mm.

As described above, by using depth levels, the order of moiré in the depth direction does not vary regardless of whether moiré appears to be recessed or project, and the depth effect can be achieved.

In the above examples described with reference to Figs. 37 to 38 and Figs. 39 to 40, the examples have four depth levels. However, the present invention is not limited thereto, and any number of depth levels can be used. Although the number of depth levels is theoretically infinite, the number of depth levels the observer can easily recognize is limited in practice. According to the research by the inventors of the present disclosure, six or less depth levels are preferably used.

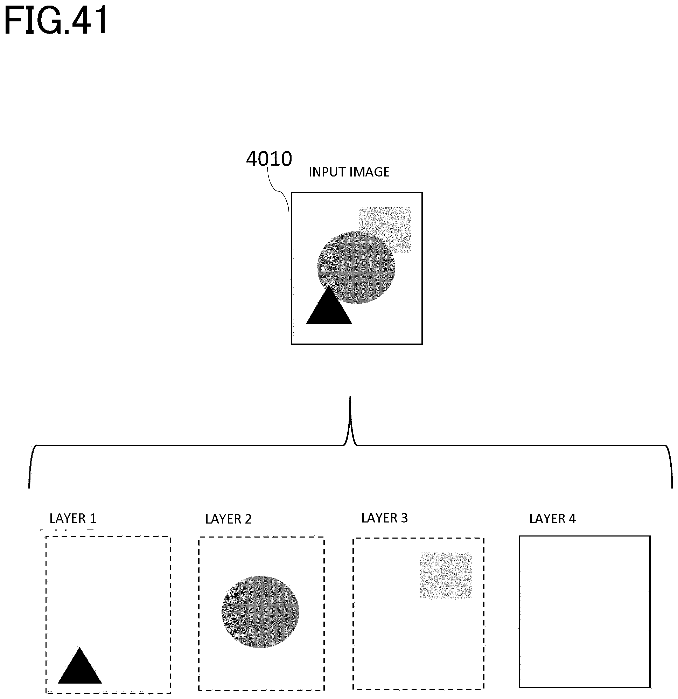

Next, with reference to Figs. 41 to 46, example use of depth levels will be described. Figs. 41 to 46 illustrate example use of depth levels.

As described above, the use of depth levels according to the present disclosure causes moiré produced by respective components (such as layers) of the pattern to be generated at different depth distances. For example, as shown in Fig. 41, when the input image 4010 includes a plurality of layers, a pitch of each layer is set corresponding to different depth levels such that moiré produced by each layer is generated at different depth distances.

The layer described herein refers to a region in the pattern which is desired to have a depth.

As described above, since the depth level that can easily identified by the observer is limited, the layer structure of moiré depends on the relationship between the number of layers included in the pattern and the number of levels. For example, when the number of layers is smaller than the number of depth levels, each layer may be set to have a pitch corresponding to different levels so that moiré produced by each layer can be generated at different depth distances. When the number of layers is smaller than the number of depth levels, moiré produced by a plurality of layers will be generated at the same depth distance.

Further, when a plurality of layers are set at the same depth level during occurrence of moiré that appears to be recessed, the layer desired to be located at a deeper depth may have a larger pitch. Accordingly, the depth distance can be set without departing from the layers. Similarly, during occurrence of moiré that appears to project, the layer desired to be located at a shallower depth may have a smaller pitch. Accordingly, the depth distance can be set without departing from the layers.

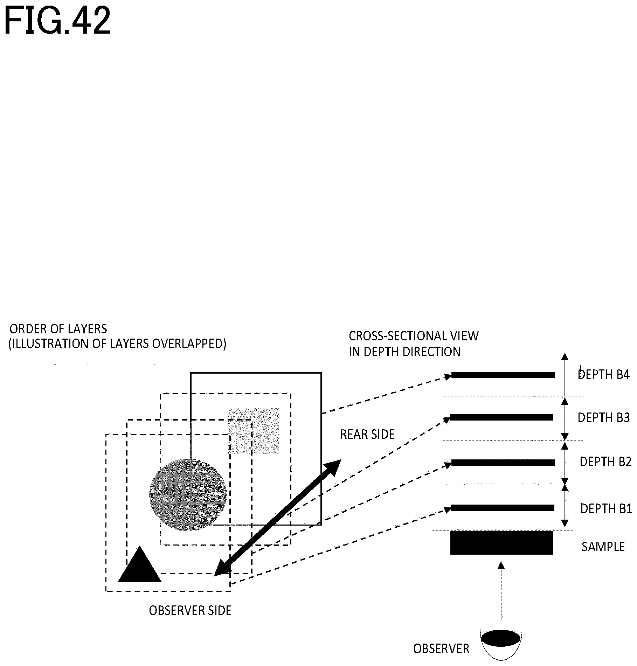

Next, with reference to Fig. 42, an example configuration of depth levels will be described. Fig. 42 is a diagram illustrating an example of a depth cross-section in which layers of an input image correspond to different depth levels.

As shown in Fig. 41, when the input image 4010 includes four layers composed of a layer 1, a layer 2, a layer 3, and a layer 4 (a triangle layer, a circle layer, and a rectangular layer as three foreground layers, and one background layer), a pitch of each layer can be set at different depth levels so that moiré produced by respective layers can be generated at different depth levels.

For example, as shown in Fig. 42, when the layer 1 has a pitch corresponding to the level B 1, the layer 2 has a pitch corresponding to the level B2, the layer 3 has a pitch corresponding to the level B3, and the layer 4 has a pitch corresponding to the level B4, moiré produced by the layer 1 can be generated at a depth distance of the level B1, moiré produced by the layer 2 can be generated at a depth distance of the level B2, moiré produced by the layer 3 can be generated at a depth distance of the level B3, and moiré produced by the layer 4 can be generated at a depth distance of the level B4.

In the example described above, a constant pitch is set for each layer. However, the present disclosure is not limited thereto, and different pitches can be set within the same layer to partially vary the depth distance of the layer. Accordingly, a depth distance with gradation or a depth distance with unevenness can be generated within one layer.

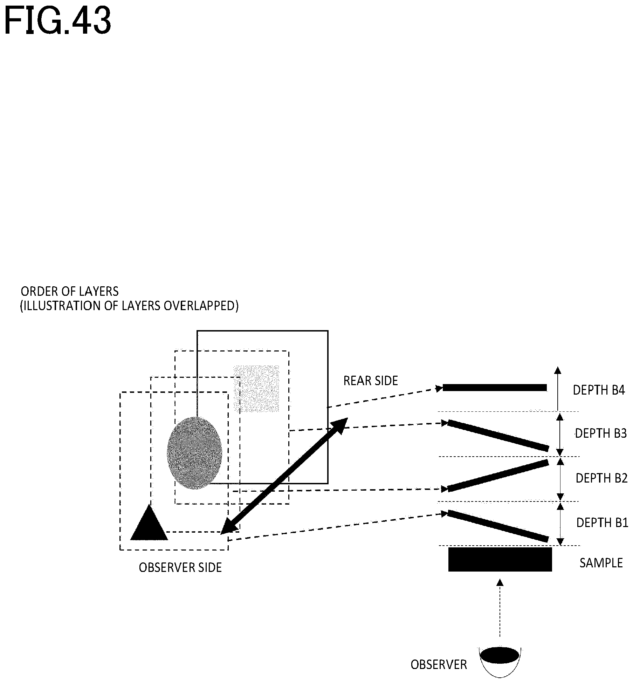

Fig. 43 is a diagram illustrating an example of a depth cross-section in which a depth distance increases linearly within the same layer. In the configuration shown in Fig. 43, the pitch of the layer 1 linearly increases from left to right, the pitch of the layer 2 linearly increases from right to left, and the pitch of the layer 3 linearly increases from left to right. Accordingly, the depth distance of moiré generated by each of the layer 1, the layer 2, and the layer 3 gradually increases, enhancing the depth effect of moiré. With this configuration, particularly, an impression of being recessed can be easily obtained.

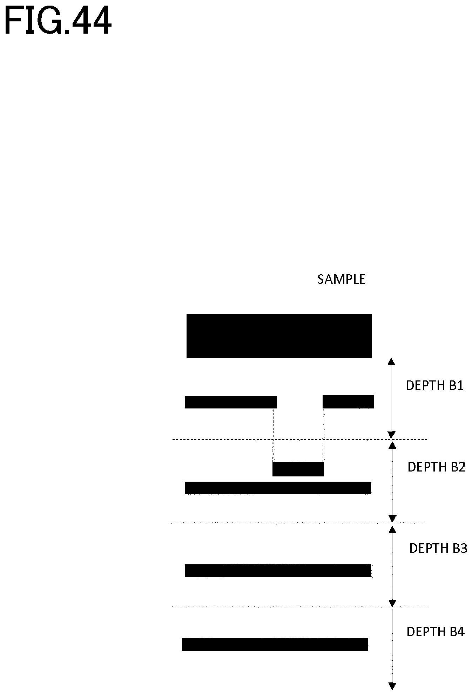

Fig. 44 is a diagram illustrating an example of a depth cross-section in which a depth distance is partially shifted within the same layer. In Fig. 44, a portion of the pitch of the layer 1 is set to the one corresponding to the level B2 rather than the one corresponding to the level B 1. Accordingly, only a portion of moiré produced by the layer 1 is generated at the depth distance of the level B2, and the remaining portion is generated at the depth distance of the level B1. This increases a decorative effect.

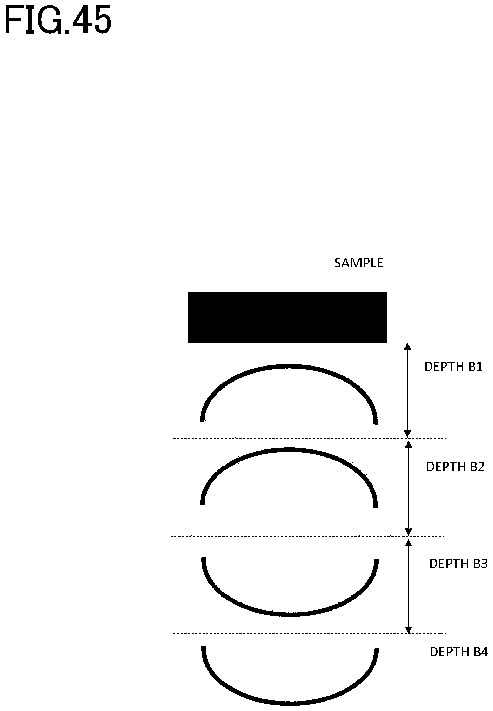

Fig. 45 is a diagram illustrating an example of a depth cross-section in which a depth distance is shifted from a center to both ends within the same layer. In Fig. 45, the pitches of the layer 1 and the layer 2 increase from the center toward both ends, and the pitches of the layer 3 and the layer 4 decrease from the center toward both ends. Accordingly, the center points of moiré produced by the layer 1 and the layer 2 appear to project forward more than the ends are, and the center points of moiré produced by the layer 3 and the layer 4 appear to be recessed backward more than the ends are. This enhances the appearance of the moiré image.

In the above description, Figs. 43 to 45 have been described by using an example of moiré that appears to be recessed. However, it should be noted that the same depth level configuration can be applied to moiré that appears to project.

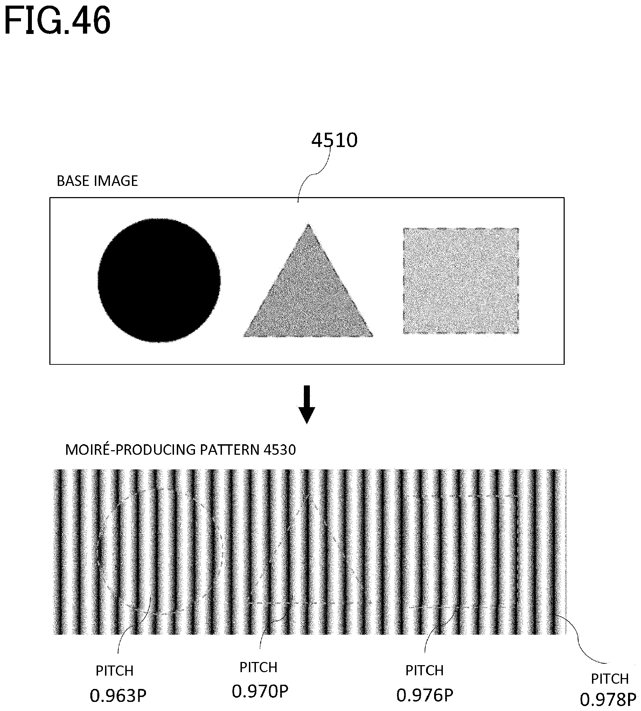

Next, with reference to Fig. 46, an example in which a pitch is different for each layer will be described. Fig. 46 is a diagram illustrating an example in which a pitch is different for each layer. As described above, in Fig. 46, an input image 4510 is composed of four layers, which are the layer 1 (circular shape), the layer 2 (triangular shape), the layer 3 (rectangular shape), and the layer 4 (background), in which the layer 1 has a pitch corresponding to the level B1, the layer 2 has a pitch corresponding to the level B2, the layer 3 has a pitch corresponding to the level B3, and the layer 4 has a pitch corresponding to the level B4. Then, when the input image 4510 is processed under these conditions, an image of a moiré-producing pattern 4530, in which the pitch of each layer is different from that of other layer is generated as shown in the lower view of Fig. 46.

<8-3 Method for Generating Moiré-producing pattern Using Depth Level>

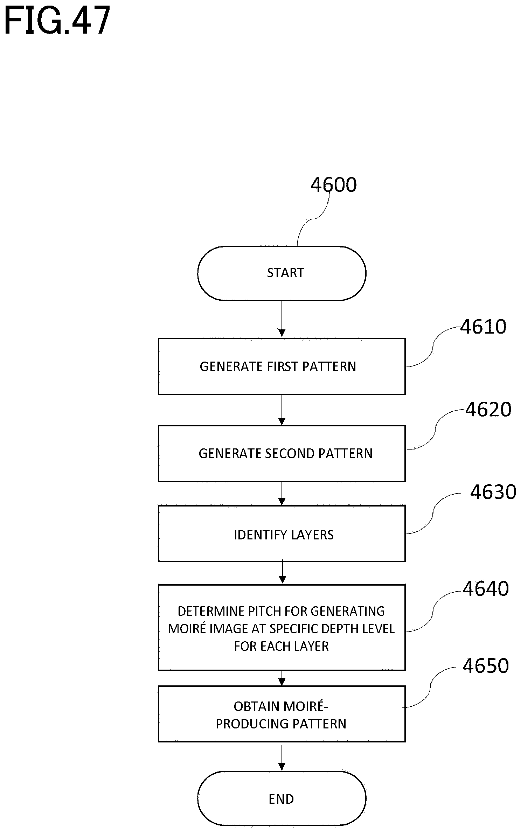

Next, with reference to Fig. 47, a method for generating a moiré-producing pattern by using depth levels according to the present disclosure will be described. Fig. 47 is a view showing a method for generating a moiré-producing pattern 4600 by using depth levels according to the present disclosure.

First, in step 4610, a first pattern is generated based on an input image and moiré information specifying the conditions of a moiré-producing pattern. The first pattern described herein is the first pattern (for example, a front side pattern) among the first pattern and the second pattern constituting the moiré-producing pattern, and is generated according to the conditions specified by the moiré information (shape, pitch, orientation, and aperture/non-aperture ratio).

Further, the input image described herein is the image data desired to create moiré, such as a design pattern shown in Fig. 1 or the like. The input image may be an image selected by the user or an image transmitted from a remote external device.

In addition, the moiré information specifying the conditions of a moiré-producing pattern includes information regarding the order of the layers included in the input image (for example, the number of layers, order of layers, and the like), information regarding the basic configuration of the moiré-producing pattern, and information regarding the overall size (expressed by pixels or distances). The information regarding the basic configuration of the moiré-producing pattern described herein includes, for example, information regarding the shape of the moiré-producing pattern (stripe, grid, or the like), the orientation of lines (vertical or oblique), the pitch, or desired sense of depth (depth distance at which moiré of the respective layers is generated), usage of the moiré pattern (material of the plate to which it is bonded, thickness, and observation distance), and the like.

Then, in step 4620, a second pattern specifying a phase shift amount for each region relative to the first pattern is generated according to the feature value of each region in the input image based on the input image and the above moiré information. The second pattern map described herein is the second pattern among the first pattern and the second pattern constituting the moiré-producing pattern, and has the phase shifted from that of the first pattern.

In order to generate the second pattern, for example, a periodic function such as sine or cosine in which the maximum value or minimum value corresponds to the maximum value or minimum value of the luminance value of the pixels may be used. Specifically, the second pattern is generated by shifting each region in the input image by a shift amount, which is calculated by using the above formula shown in Fig. 33 according to the feature value (for example, grayscale value).

Then, in step 4630, layers included in the input image are identified based on the input image and the moiré information. Specifically, these layers may be specified manually by the user based on information included in the moiré information regarding the order, or may be specified automatically by predetermined image analysis software. For example, as an example of identifying layers included in the input image, a predetermined image analysis software may identify the layer 1, the layer 2, the layer 3, and the layer 4 included in the input image shown in Fig. 28.

Then, in step 4640, a pitch for generating a moiré image by each layer among the plurality of identified layers at a depth level which defines a range of a specific depth distance is determined based on the input image and the moiré information. As described above, the depth level refers to a segment having a predetermined (quantized) depth distance that produces moiré, and is determined for each range of different pitches. The depth level of each layer may be determined according to the conditions included in the moiré information, or may be determined as appropriate according to the order of layers (for example, a pitch that makes the layer located on a front side appear to project, a pitch that makes the layer located on a rear side appear to be recessed, or the like). Further, the pitch for generating moiré at a specific depth level may be calculated by using the above formulas 22 and 23.

Fig. 47 shows an example in which a step of determining a pitch for generating a moiré image at a depth level which defines a range of a specific depth distance is performed after the steps of generating the first pattern and the second pattern. However, the timing of the step of determining a pitch is not limited thereto, and the step can be performed at any timing. For example, the step of determining a pitch may be performed before the step of generating a first pattern, may be performed after the step of generating a second pattern, or may be performed according to enlargement or reduction of the image after imaging the moiré-producing pattern.

Next, in step 4650, a moiré-producing pattern is obtained from the image of the first pattern and the image of the second pattern. Specifically, as described above, this may include superimposing a display on which the first pattern is printed and a display on which the second pattern is printed with a predetermined distance (gap) therebetween. Accordingly, a moiré-producing pattern for generating moiré according to the input image and the moiré information can be obtained.

<9-0 System for Generating Moiré Image-Producing Pattern>

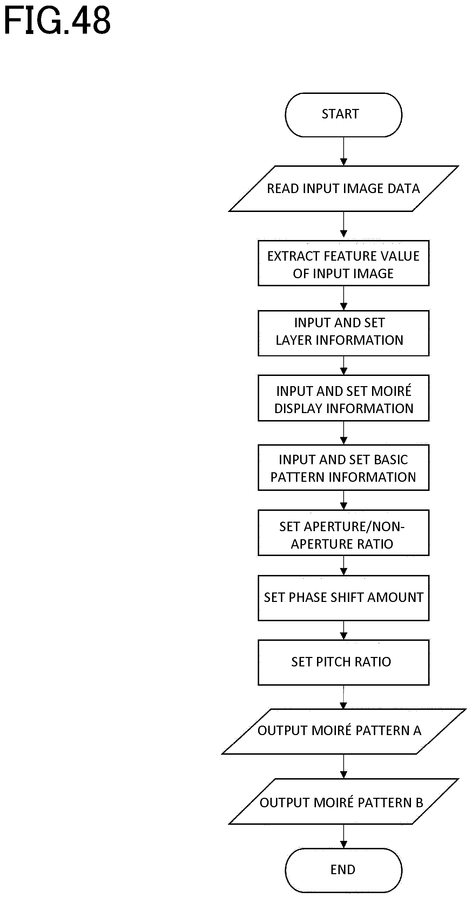

Fig. 48 is an example of a simplified flowchart for obtaining an output pattern as an image. However, the order of inputting information (input of information such as layer information) is not limited to that described in the flowchart.

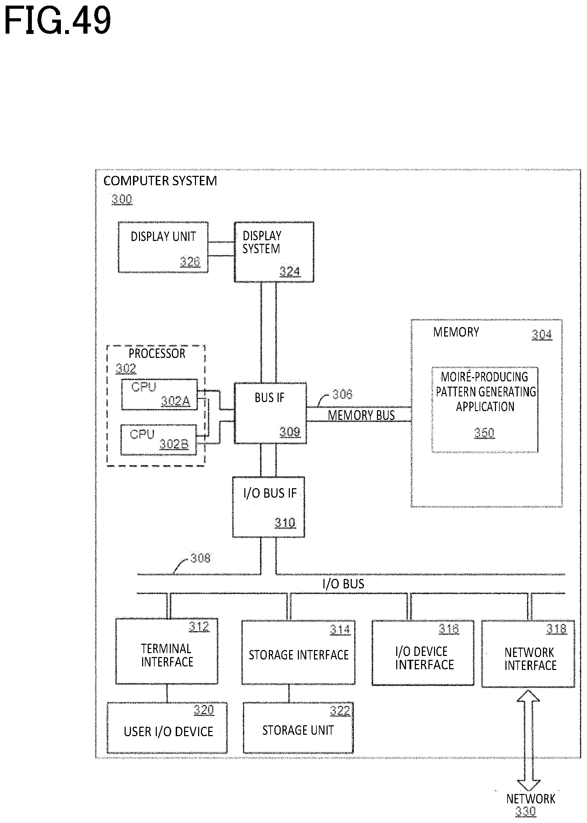

Then, with reference to Fig. 49, a computer system 300 for implementing an embodiment of the present disclosure will be described. Mechanisms and apparatuses in various embodiments disclosed herein may be applied to any suitable computing system. The major components of the computer system 300 include one or more processors 302, a memory 304, a terminal interface 312, a storage interface 314, an I/O (input/output) device interface 316, and a network interface 318. These components may be mutually connected via a memory bus 306, an I/O bus 308, a bus interface unit 309, and an I/O bus interface unit 310.

The computer system 300 may include one or more general purpose programmable central processing units (CPUs) 302A and 302B, collectively referred to as processors 302. In one embodiment, the computer system 300 may include a plurality of processors, and in another embodiment, the computer system 300 may be a single CPU system. Each processor 302 may execute instructions stored in the memory 304 and include on-board cache.

In one embodiment, the memory 304 may include a random access semiconductor memory, a storage unit, or a storage medium (volatile or non-volatile) for storing data and programs. The memory 304 may store all or part of programs, modules, and data structures for implementing functions described herein. For example, the memory 304 may store a moiré-producing pattern generating application 350. In one embodiment, the moiré-producing pattern generating application 350 may include instructions or descriptions for executing functions described later, using the processor 302.

In one embodiment, the moiré-producing pattern generating application 350 may be implemented on a hardware via semiconductor devices, chips, logic gates, circuits, circuit cards, and/or other physical hardware devices instead of a processor-based system or in addition to a processor-based system. In one embodiment, the moiré-producing pattern generating application 350 may include data other than instructions or descriptions. In one embodiment, a camera, a sensor, or other data input devices (not shown) may be provided to directly communicate with the bus interface unit 309, the processor 302, or other hardware of the computer system 300.

The computer system 300 may include a bus interface unit 309 that performs communication among the processor 302, the memory 304, a display system 324, and the I/O bus interface unit 310. The I/O bus interface unit 310 may be connected to the I/O bus 308 that transfers data to and from various I/O units. The I/O bus interface unit 310 may communicate with the plurality of I/O interface units 312, 314, 316, and 318, which are also known as I/O processors (IOPs) or I/O adapters (IOAs), via the I/O bus 308.

The display system 324 may include either or both of a display controller and a display memory. The display controller can provide either or both of video data and audio data to a display unit 326. Further, the computer system 300 may include devices such as one or more sensors configured to collect data and provide the data to the processor 302.

For example, the computer system 300 may include a biometric sensor that collects heart rate data, stress level data, or the like, an environmental sensor that collects humidity data, temperature data, pressure data, or the like, and a motion sensor that collects acceleration data, motion data, or the like. Other types of sensors may also be used. The display system 324 may be connected to a display unit 326 such as a stand-alone display screen, television, tablet, portable device, or the like.

The I/O interface units have a function of communicating with various storages or I/O devices. For example, the terminal interface unit 312 can be connected to a user I/O device 320. Examples of the user I/O device 320 include user output devices such as a video display unit, speaker television, and the like, or user input devices such as a keyboard, mouse, keypad, touchpad, trackball, button, light pen or other pointing device, and the like. The user may input data or instructions to the user I/O device 320 and the computer system 300 by controlling the user input device via a user interface, and receive output data from the computer system 300. The user interface may be displayed on a display unit, reproduced by a speaker, or printed via a printer, for example, via the user I/O device 320.

The storage interface 314 can be connected to one or more disk drives or direct access storage units 322 (usually a magnetic disk drive storage unit, but may also be an array of disk drives or other storage units configured to appear as a single disk drive). In one embodiment, the storage unit 322 may also be implemented as any secondary storage unit. The contents of the memory 304 may be stored in the storage unit 322, and read from the storage unit 322 as needed. The I/O device interface 316 may provide an interface to other I/O devices such as a printer, fax machine, and the like. The network interface 318 may provide a communication path so that the computer system 300 can mutually communicate with other devices. The communication path may be, for example, a network 330.

In one embodiment, the computer system 300 may be a device that receives requests from other computer systems (clients) having no direct user interface, such as a multi-user main frame computer systems, single-user systems, and server computers. In another embodiment, the computer system 300 may be a desk top computer, a portable computer, a notebook computer, a tablet computer, a pocket computer, a telephone, a smartphone, or other suitable electronic device.

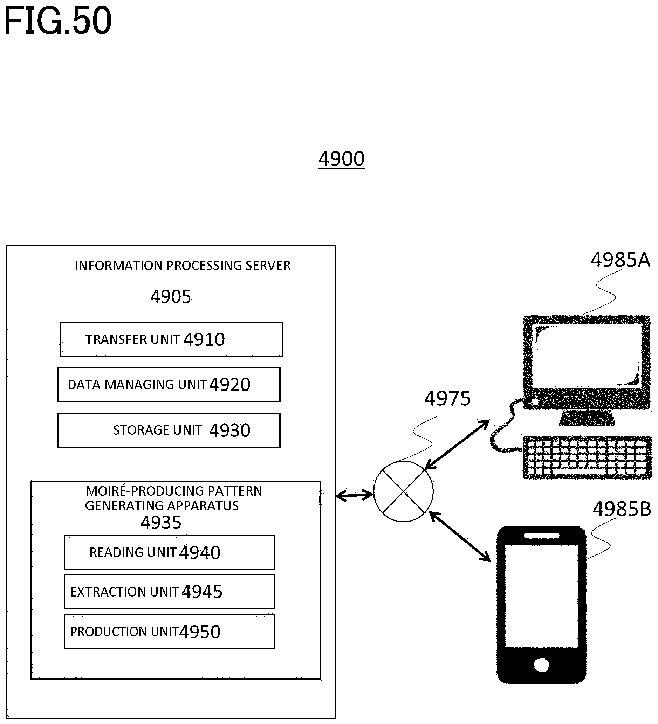

Next, with reference to Fig. 50, a system configuration according to the present disclosure will be described. Fig. 50 is a view showing a moiré-producing pattern generating system 4900 according to the present disclosure.

As shown in Fig. 50, the moiré-producing pattern generating system 4900 according to the present disclosure is mainly composed of an information processing server 4905, a network 4975, and client terminals 4985A and 4985B. The information processing server 4905 is connected to the client terminals 4985A and 4985B via the network 4975.

The information processing server 4905 is composed of a transfer unit 4910 that performs data transmission and reception with external devices such as the client terminals 4985A and 4985B, a data management unit 4920 that manages various data received from the client terminals 4985A and 4985B, a storage unit 4930 for storing input images and moiré information received from the client terminals 4985A and 4985B, and a moiré-producing pattern generating apparatus 4935 for generating a moiré-producing pattern.

Further, as shown in Fig. 50, the moiré-producing pattern generating apparatus 4935 includes a reading unit 4940 for reading an input image, an extraction unit 4945 for extracting a feature value of the input image, and a production unit 4950 for producing a moiré-producing pattern.

Further, each functional unit included in the information processing server 4905 may be a software module constituting the moiré-producing pattern generating application 350 shown in Fig. 49, or may be an independent dedicated hardware device. Further, the above functional unit may be implemented in the same computing environment, or may be implemented in a distributed computing environment. For example, a moiré-producing pattern managing unit 235 may be mounted on a remote server, and other functional units may be mounted on local device such as the client terminals 4985A and 4985B.

The client terminals 4985A and 4985B are client terminals that receive information regarding a moiré-producing pattern generated by the moiré-producing pattern generating apparatus 4935. These client terminals 4985A and 4985B may be terminals used by individuals or may be terminals in organizations such as police stations and private companies. These client terminals 4985A and 4985B may be, for example, a desktop computer, a notebook computer, a tablet, a smartphone, or any other device.

The present invention is not limited to the examples described above, and may also be various modified examples. For example, various modifications such as setting of the shape of the basic pattern, setting of the aperture/non-aperture ratio, and expressing data on the front side and rear side patterns are possible. In addition, the drawings used in the above examples are shown in detail in order to facilitate understanding of the present invention, and are not necessarily limited to the design patterns or the like shown in the examples.

In the above description, examples for implementing the embodiments of the present invention by using the form of a method, an apparatus, a system, or the like have been described. However, the embodiments of the present invention are not limited these examples, and may also be implemented in the form of printed matter (display), a computer program, or the like.

For example, in one embodiment, the present invention may be embodied as printed matter manufactured by a method including the steps of: generating a first pattern based on an input image and moiré information specifying a condition of the moiré-producing pattern; generating a second pattern that determines a phase shift amount relative to the first pattern, the phase shift amount being determined for each region in the input image according to a feature value of the region based on the input image and the moiré information; identifying a plurality of layers included in the input image based on the input image and the moiré information; determining a pitch for generating a moiré image by the layers at a depth level which defines a range of a specific depth distance, the pitch being determined for each of the plurality of identified layers based on the input image and the moiré information; and obtaining a moiré-producing pattern composed of the first pattern and the second pattern based on the determined pitch.

In another example, the present invention may be embodied as printed matter manufactured by a method including the steps of: generating a first pattern map represented by using an intensity of density of pixels based on an input image and moiré information specifying a condition of the moiré-producing pattern; generating a second pattern map represented by using the intensity that determines a phase shift amount relative to the first pattern, the phase shift amount being determined for each region in the input image according to a feature value of the region based on the input image and the moiré information; generating an image of the first pattern derived from the first pattern map; generating an image of the second pattern derived from the second pattern map; and obtaining a moiré-producing pattern composed of the image of the first pattern and the image of the second pattern, wherein the step of generating a second pattern map further includes calculating the phase shift amount by using a periodic function in which a maximum value or a minimum value of the periodic function corresponds to a maximum value or a minimum value of a feature value of the pixels.

In still another example, the present invention may be embodied as printed matter manufactured by a method including the steps of: generating a first pattern based on an input image and moiré information specifying a condition of the moiré-producing pattern; generating a second pattern that determines a phase shift amount relative to the first pattern, the phase shift amount being determined for each region in the input image according to a feature value of the region based on the input image and the moiré information; and setting an aperture/non-aperture ratio of the moiré-producing pattern according to the feature value of the input image.

In addition, it should be noted that various modifications can be made to the setting of the phase shift amount, pitch ratio, aperture/non-aperture ratio, and the like described above.

[Reference Signs List]

| | |
|---|---|
| 4900 | Moiré-producing pattern generating system |
| 4905 | Information processing server |
| 4910 | Transfer unit |
| 4920 | Data managing unit |
| 4930 | Storage unit |
| 4935 | Moiré-producing pattern generating apparatus |
| 4940 | Reading unit |
| 4945 | Extraction unit |
| 4950 | Production unit |
| 4975 | Network |
| 4985A, 4985B | Client terminal |

**Claims**

1. A method for generating a moiré-producing pattern comprising the steps of:

generating a first pattern based on an input image and moiré information specifying a condition of the moiré-producing pattern;
generating a second pattern that determines a phase shift amount relative to the first pattern, the phase shift amount being determined for each region in the input image according to a feature value of the region based on the input image and the moiré information;
the method **characterized in that** it comprises the steps of:

identifying a plurality of layers included in the input image based on the input image and the moiré information;
determining a pitch for generating a moiré image using the layers at a depth level which defines a range of a specific depth distance, the pitch being determined for each of the plurality of identified layers based on the input image and the moiré information; and
obtaining a moiré-producing pattern composed of the first pattern and the second pattern based on the determined pitch.

2. The method for generating a moiré-producing pattern according to claim 1, wherein

the step of determining a pitch includes setting a constant pitch which is different for each of the plurality of layers, or
the step of determining a pitch includes setting a pitch for two or more layers among the plurality of layers to a pitch corresponding to the same depth level.

3. The method for generating a moiré-producing pattern according to claim 1, wherein

a specific layer among the plurality of layers includes a first region and a second region;

the step of determining a pitch includes setting a first pitch for the first region, and setting a second pitch for the second region, the second pitch being different from the first pitch.

4. The method for generating a moiré-producing pattern according to claim 1, wherein the step of obtaining a moiré-producing pattern includes the steps of:

printing an image of the first pattern on a first film, and bonding the first film to a first panel;
printing an image of the second pattern on a second film, and bonding the second film to a second panel; and
superimposing the first panel and the second panel on each other with a predetermined gap therebetween.

5. The method for generating a moiré-producing pattern according to claim 4, wherein

a) the depth level defines a degree to which a moiré image appears to project forward from the first panel and the second panel,
b) the depth level defines a degree to which a moiré image appears to be recessed backward from the first panel and the second panel,
c) the pitch for generating a moiré image at a specific depth level is applied to the second pattern, or
d) the pitch for generating a moiré image at a specific depth level is calculated using a viewing distance between the moiré-producing pattern and an observer, a desired depth distance, a distance of the gap between the first panel and the second panel, and a pitch of the first pattern.

6. An apparatus for generating a moiré-producing pattern comprising:

a reading unit;
an extraction unit; and
a production unit, wherein
the reading unit is configured to obtain an input image on which a moiré-producing pattern is based and moiré information specifying a condition of the moiré-producing pattern,
the extraction unit is configured to extract a feature value for each region in the input image,
the production unit is configured to perform the method according to one of the preceding claims.

7. A system for generating a moiré-producing pattern comprising:

an information processing server; and
at least one client terminal connected to the information processing server via a communication network, wherein the information processing server includes the apparatus according to claim 6.

**Patentansprüche**

1. Verfahren zum Erzeugen eines Moiré-erzeugenden Musters, umfassend die folgenden Schritte:

Erzeugen eines ersten Musters auf der Grundlage eines Eingabebildes und von Moiré-Informationen, die eine Bedingung des Moiré-erzeugenden Musters spezifizieren;
Erzeugen eines zweiten Musters, das eine Größe der Phasenverschiebung relativ zum ersten Muster bestimmt, wobei die Größe der Phasenverschiebung für jeden Bereich im Eingabebild gemäß einem Merkmalswert des Bereichs auf der Grundlage des Eingabebildes und der Moiré-Informationen bestimmt wird;
wobei das Verfahren **dadurch gekennzeichnet ist, dass** es die folgenden Schritte umfasst:

Identifizieren einer Vielzahl von Schichten, die in dem Eingabebild eingeschlossen sind, basierend auf dem Eingabebild und den Moiré-Informationen;
Bestimmen einer Teilung zum Erzeugen eines Moiré-Bildes unter Verwendung der Schichten in einer Tiefenebene, die einen Bereich eines spezifischen Tiefenabstands definiert, wobei die Teilung für jede der Vielzahl identifizierter Schichten auf der Grundlage des Eingabebildes und der Moiré-Informationen bestimmt wird; und
Erhalten eines Moiré-erzeugenden Musters, das aus dem ersten Muster und dem zweiten Muster besteht, basierend auf der bestimmten Teilung.

**2.** Verfahren zum Erzeugen eines Moiré-erzeugenden Musters nach Anspruch 1, wobei

der Schritt des Bestimmens einer Teilung das Festlegen einer konstanten Teilung einschließt, die für jede der Vielzahl von Schichten unterschiedlich ist, oder

der Schritt des Bestimmens einer Teilung das Festlegen einer Teilung für zwei oder mehrere Schichten unter der Vielzahl von Schichten auf eine Teilung einschließt, die der gleichen Tiefenstufe entspricht.

**3.** Verfahren zum Erzeugen eines Moiré-erzeugenden Musters nach Anspruch 1, wobei

eine spezifische Schicht unter der Vielzahl von Schichten einen ersten Bereich und einen zweiten Bereich einschließt;

der Schritt des Bestimmens einer Teilung einschließt, dass eine erste Teilung für den ersten Bereich festgelegt wird und dass eine zweite Teilung für den zweiten Bereich festgelegt wird, wobei sich der zweite Bereich vom ersten Bereich unterscheidet.

**4.** Verfahren zum Erzeugen eines Moiré-erzeugenden Musters nach Anspruch 1, wobei der Schritt des Erhaltens eines Moiré-erzeugenden Musters die folgenden Schritte einschließt:

Drucken eines Bildes des ersten Musters auf einen ersten Film und Kleben des ersten Films auf eine erste Platte;

Drucken eines Bildes des zweiten Musters auf einen zweiten Film und Kleben des zweiten Films auf eine zweite Platte; und

Überlagern der ersten Platte und der zweiten Platte mit einem vorgegebenen Spalt dazwischen.

**5.** Verfahren zum Erzeugen eines Moiré-erzeugenden Musters nach Anspruch 4, wobei

a) die Tiefenstufe einen Grad definiert, in dem ein Moiré-Bild von der ersten Platte und der zweiten Platte nach vorne zu projizieren scheint,

b) die Tiefenstufe einen Grad definiert, in dem ein Moiré-Bild von der ersten Platte und der zweiten Platte nach hinten vertieft zu sein scheint,

c) die Teilung zum Erzeugen eines Moiré-Bildes auf einer spezifischen Tiefenstufe auf das zweite Muster angewendet wird, oder

d) die Teilung zum Erzeugen eines Moiré-Bildes auf einer spezifischen Tiefenstufe unter Verwendung eines Sichtabstands zwischen dem Moiré-erzeugenden Muster und einem Betrachter, eines gewünschten Tiefenabstands, eines Abstands des Spalts zwischen der ersten Platte und der zweiten Platte und einer Teilung des ersten Musters berechnet wird.

**6.** Vorrichtung zum Erzeugen eines Moiré-erzeugenden Musters, umfassend:

eine Leseeinheit;

eine Extraktionseinheit; und

eine Produktionseinheit, wobei

die Leseeinheit so konfiguriert ist, dass sie ein Eingabebild, auf dem ein Moiréerzeugendes Muster basiert, und Moiré-Informationen, die einen Zustand des Moiré-erzeugenden Musters spezifizieren, erhält,

die Extraktionseinheit so konfiguriert ist, dass sie einen Merkmalswert für jeden Bereich im Eingabebild extrahiert,

die Produktionseinheit so konfiguriert ist, dass sie das Verfahren nach einem der vorstehenden Ansprüche durchführt.

**7.** System zum Erzeugen eines Moiré-erzeugenden Musters, umfassend:

einen Informationsverarbeitungsserver; und

mindestens ein Kundenendgerät, das über ein Kommunikationsnetzwerk mit dem Informationsverarbeitungsserver verbunden ist, wobei

der Informationsverarbeitungsserver die Vorrichtung nach Anspruch 6 einschließt.

**Revendications**

**1.** Procédé de génération d'un motif de production de moiré comprenant les étapes consistant à :

générer un premier motif sur la base d'une image d'entrée et d'informations de moiré spécifiant une condition du motif de production de moiré ;

générer un second motif qui détermine une quantité de déphasage par rapport au premier motif, la quantité de déphasage étant déterminée pour chaque région dans l'image d'entrée en fonction d'une valeur caractéristique de la région sur la base de l'image d'entrée et des informations de moiré ;

le procédé **caractérisé en ce qu'**il comprend les étapes consistant à :

identifier une pluralité de couches incluses dans l'image d'entrée sur la base de l'image d'entrée et des informations de moiré ;

déterminer un pas pour générer une image de moiré en utilisant les couches à un niveau de profondeur qui définit une plage d'une distance de profondeur spécifique, le pas étant déterminé pour chacune de la pluralité de couches identifiées sur la base de l'image d'entrée et des informations de moiré ; et

obtenir un motif de production de moiré composé du premier motif et du second motif sur la base du pas déterminé.

2. Procédé de génération d'un motif de production de moiré selon la revendication 1, dans lequel

l'étape de détermination d'un pas inclut un réglage d'un pas constant qui est différent pour chacune de la pluralité de couches, ou

l'étape de détermination d'un pas inclut un réglage d'un pas pour deux couches ou plus parmi la pluralité de couches jusqu'à un pas correspondant au même niveau de profondeur.

3. Procédé de génération d'un motif de production de moiré selon la revendication 1, dans lequel

une couche spécifique parmi la pluralité de couches inclut une première région et une seconde région ;

l'étape de détermination d'un pas inclut un réglage d'un premier pas pour la première région, et un réglage d'un second pas pour la seconde région, le second pas étant différent du premier pas.

4. Procédé de génération d'un motif de production de moiré selon la revendication 1, dans lequel l'étape d'obtention d'un motif de production de moiré inclut les étapes consistant à :

imprimer une image du premier motif sur un premier film, et coller le premier film sur un premier panneau ;

imprimer une image du second motif sur un second film, et coller le second film sur un second panneau ; et

superposer le premier panneau et le second panneau l'un sur l'autre avec un écartement prédéterminé entre eux.

5. Procédé de génération d'un motif de production de moiré selon la revendication 4, dans lequel

a) le niveau de profondeur définit un degré auquel une image de moiré apparaît dépasser vers l'avant par rapport au premier panneau et au second panneau,

b) le niveau de profondeur définit un degré auquel une image de moiré apparaît être en retrait vers l'arrière par rapport au premier panneau et au second panneau,

c) le pas pour générer une image de moiré à un niveau de profondeur spécifique est appliqué au second motif, ou

d) le pas pour générer une image de moiré à un niveau de profondeur spécifique est calculé en utilisant une distance de visualisation entre le motif de production de moiré et un observateur, une distance de profondeur souhaitée, une distance de l'écartement entre le premier panneau et le second panneau, et un pas du premier motif.

6. Appareil de génération d'un motif de production de moiré comprenant :

une unité de lecture ;

une unité d'extraction ; et

une unité de production, dans lequel

l'unité de lecture est configurée pour obtenir une image d'entrée sur laquelle un motif de production de moiré est basé et des informations de moiré spécifiant une condition du motif de production de moiré,

l'unité d'extraction est configurée pour extraire une valeur caractéristique pour chaque région dans l'image d'entrée,

l'unité de production est configurée pour mettre en oeuvre le procédé selon l'une des revendications précédentes.

7. Système de génération d'un motif de production de moiré comprenant :

un serveur de traitement d'information ; et
au moins un terminal client connecté au serveur de traitement d'information par l'intermédiaire d'un réseau de communication, dans lequel
le serveur de traitement d'information inclut l'appareil selon la revendication 6.

# FIG.1

# FIG.2

REAR SIDE

3

2

OBSERVER SIDE

1

# FIG.3

# FIG.4

(a)

(b)

(c)

# FIG.5

MAXIMUM VALUE

TRANSMITTANCE

APERTURE

# FIG.6

# FIG.7

FILM 1

PATTERN LAYER 1
(PRINT PORTION)

PANEL

PATTERN LAYER 2
(PRINT PORTION)

FILM 2

# FIG.8

FILM 1

PATTERN LAYER 1
(PRINT PORTION)

PANEL 1

PANEL 2

PATTERN LAYER 2
(PRINT PORTION)

FILM 2

FILM 3

# FIG.9

PATTERN LAYER 1
(PRINT PORTION)

PANEL

PATTERN LAYER 2
(PRINT PORTION)

# FIG.10

# FIG.11

PANEL 1

PATTERN LAYER 1
(PRINT PORTION)

FILM 1

GAP

FILM 2

PANEL 2

PATTERN LAYER 2
(PRINT PORTION)

# FIG.12

BASIC PATTERN (a)

NON-APERTURE

APERTURE

APERTURE/NON-APERTURE RATIO

1.0

( b )

( c )

( d )

APERTURE/NON-APERTURE RATIO

1.5

APERTURE/NON-APERTURE RATIO

2.0

APERTURE/NON-APERTURE RATIO

2.5

( e )

( f )

( g )

APERTURE/NON-APERTURE RATIO

3.0

APERTURE/NON-APERTURE RATIO

4.0

APERTURE/NON-APERTURE RATIO

9.0

# FIG.13

GRAYSCALE LEVEL
100%

0%

45%

75%

※ THE DOTTED LINES IN THE FIGURE ARE INDICATED
FOR THE PURPOSE OF ILLUSTRATION.

# FIG.14

APERTURE/NON-APERTURE RATIO
4.0

APERTURE/NON-APERTURE RATIO
1.0

APERTURE/NON-APERTURE RATIO
1.8

APERTURE/NON-APERTURE RATIO
3.0

※ THE DOTTED LINES IN THE FIGURE ARE INDICATED
FOR THE PURPOSE OF ILLUSTRATION.

# FIG.15

# FIG.16

| APERTURE/NON-APERTURE RATIO | MOIRÉ APPEARANCE EVALUATION | DEGREE OF LIGHTNESS/ DARKNESS OF MOIRÉ |
|---|---|---|
| 1.0 | FAIR | 0 |
| 1.5 | GOOD | 1 |
| 2.0 | GOOD | 2 |
| 2.5 | GOOD | 3 |
| 3.0 | GOOD | 4 |
| 4.0 | FAIR | 5 |
| 9.0 | POOR | 5 |

# FIG.17

WAVES USED FOR GENERATING MOIRÉ　　　　　　　　HARMONIC WAVES

$$T_B = \frac{a_0}{2} + a_1 \cos\left(\frac{2\pi}{P_b}x\right) + a_2 \cos\left(\frac{2\pi}{P_b} \cdot 2x\right) + a_3 \cos\left(\frac{2\pi}{P_b} \cdot 3x\right) + \cdots$$

←　THIN　　　　　　　　COEFFICIENT TABLE　1710　　　　　　　THICK →

| | L/S | | | | | | |
|---|---|---|---|---|---|---|---|
| | 2/8 | 3/7 | 4/6 | 5/5 | 6/4 | 7/3 | 8/2 |
| a0 | 1.6 | 1.4 | 1.2 | 1 | 0.8 | 0.6 | 0.4 |
| a1 | 0.374 | 0.515 | 0.605 | 0.637 | 0.605 | 0.515 | 0.374 |
| a2 | −0.303 | −0.303 | −0.187 | 0.000 | 0.187 | 0.303 | 0.303 |
| a3 | 0.202 | 0.066 | −0.125 | −0.212 | −0.125 | 0.066 | 0.202 |

# FIG.18

DENSITY LEVEL CLASSIFICATION TABLE 1805

| LEVEL | APERTURE/NON-APERTURE RATIO |
|---|---|
| C100 | ~1.0 |
| C75 | 1.0~2.0 |
| C50 | 2.0~2.7 |
| C25 | 2.7~3.0 |
| C0 | 3.0~ |

DARK

LIGHT

# FIG.19

1900

START

GENERATE FIRST PATTERN MAP —1910

GENERATE SECOND PATTERN MAP —1920

SET APERTURE/NON-APERTURE RATIO OF MOIRÉ-PRODUCING PATTERN —1930

END

# FIG.20

2000

INPUT IMAGE

2050

MOIRÉ-PRODUCING PATTERN

APERTURE/NON-APERTURE RATIO

2005                    2010                    5.7

                                                    2020

                                                    2015

APERTURE/NON-APERTURE RATIO    APERTURE/NON-APERTURE RATIO    APERTURE/NON-APERTURE RATIO
1.0                            1.9                            3.0

# FIG.21

FEATURE VALUE
(GRAYSCALE LEVEL)

0%    50%    100%

NON-APERTURE    APERTURE

FRONT SIDE PATTERN

REAR SIDE PATTERN

PHASE SHIFT AMOUNT    PHASE SHIFT AMOUNT

OBSERVED
FROM FRONT

# FIG.22

FEATURE VALUE
(GRAYSCALE LEVEL)

REAR SIDE
PATTERN

OBSERVED
FROM FRONT

FRONT SIDE
PATTERN

# FIG.23

VIEWING DIRECTION

SCANNING DIRECTION

# FIG.24

SCANNING DIRECTION

# FIG.25

2500

START

2510

GENERATE FIRST
PATTERN MAP

2520

GENERATE SECOND
PATTERN MAP

2530

GENERATE IMAGE OF
FIRST PATTERN

2540

GENERATE IMAGE OF
SECOND PATTERN

2550

OBTAIN MOIRÉ-PRODUCING
PATTERN

END

FIG.26

2650

# FIG.27

2650

| | | | | | | | | | |
|---|---|---|---|---|---|---|---|---|---|
| 1 | 0.904508 | 0.654508 | 0.345492 | 0.095492 | 0 | 0.095492 | 0.345492 | 0.654508 | 0.904508 |
| 1 | 0.904508 | 0.654508 | 0.345492 | 0.095492 | 0 | 0.095492 | 0.345492 | 0.654508 | 0.904508 |
| 1 | 0.904508 | 0.654508 | 0.345492 | 0.095492 | 0 | 0.095492 | 0.345492 | 0.654508 | 0.904508 |
| 1 | 0.904508 | 0.654508 | 0.345492 | 0.095492 | 0 | 0.095492 | 0.345492 | 0.654508 | 0.904508 |
| 1 | 0.904508 | 0.654508 | 0.345492 | 0.095492 | 0 | 0.095492 | 0.345492 | 0.654508 | 0.904508 |
| 1 | 0.904508 | 0.654508 | 0.345492 | 0.095492 | 0 | 0.095492 | 0.345492 | 0.654508 | 0.904508 |
| 1 | 0.904508 | 0.654508 | 0.345492 | 0.095492 | 0 | 0.095492 | 0.345492 | 0.654508 | 0.904508 |
| 1 | 0.904508 | 0.654508 | 0.345492 | 0.095492 | 0 | 0.095492 | 0.345492 | 0.654508 | 0.904508 |

FIG.28

# FIG.29

2800

Y=0.5+0.5cos(x)

cos wave (pi)

# FIG.30

# FIG.31

3000

GRAYSCALE VALUE

3005

3010

100%

3015

0%

45%

75%

# FIG.32

INPUT IMAGE 3000

MOIRÉ-PRODUCING PATTERN 3500

# FIG.33

FEATURE VALUE TABLE 3200

3210          3220                              3230

| FEATURE VALUE | NUMERICAL RANGE (EXAMPLE) | EXAMPLE OF PHASE CALCULATION BY Y=0.5+0.5COS(X) |
|---|---|---|
| LUMINANCE (L*) | 0~100 | $\pi \times ((100\text{-}k)/100)$ |
| GRAYSCALE VALUE | 0~100[%] | $\pi \times ((100\text{-}k)/100)$ |
| RGB VALUE | 0~255 | $\pi \times (1\text{-}k/255)$ |
| CMYK VALUE | 0~100[%] | $\pi \times k/100$ |

# FIG.34

# FIG.35

# FIG.36

(MOIRÉ THAT APPEARS TO PROJECT)

# FIG.37

K

D

xB

g(n2)

SB

B1

B2

(MOIRÉ THAT APPEARS TO BE RECESSED)

B3

B4

# FIG.38

FRONT SIDE

REAR SIDE

| LEVEL | LEVEL VALUE | EXAMPLE OF PITCH Pb (5-MM THICK ACRYLIC PLATE, VIEWING DISTANCE 1000mm,Pa 1.693mm) |
|---|---|---|
| B1 | 0~D | ~1.6820 |
| B2 | D~3D | 1.6820~1.6877 |
| B3 | 3D~5D | 1.6877~1.6888 |
| B4 | 5D~ | 1.6888~ |

# FIG.39

(MOIRÉ THAT APPEARS TO PROJECT)

# FIG.40

FRONT SIDE

REAR SIDE

| LEVEL | LEVEL VALUE | EXAMPLE OF PITCH Pb (5-MM THICK ACRYLIC PLATE, VIEWING DISTANCE 1000mm,Pa 1.693mm) |
|---|---|---|
| F4 | 0.5D~ | ~1.7075 |
| F3 | 0.3D~0.5D | 1.7075~1.7188 |
| F2 | 0.05D~0.3D | 1.7188~1.8604 |
| F1 | 0~0.05D | 1.8604~ |

# FIG.41

4010

INPUT IMAGE

LAYER 1

LAYER 2

LAYER 3

LAYER 4

# FIG.42

ORDER OF LAYERS
(ILLUSTRATION OF LAYERS OVERLAPPED)

CROSS-SECTIONAL VIEW
IN DEPTH DIRECTION

REAR SIDE

OBSERVER SIDE

DEPTH B4

DEPTH B3

DEPTH B2

DEPTH B1

SAMPLE

OBSERVER

# FIG.43

ORDER OF LAYERS
(ILLUSTRATION OF LAYERS OVERLAPPED)

REAR SIDE

DEPTH B4

DEPTH B3

DEPTH B2

DEPTH B1

SAMPLE

OBSERVER SIDE

OBSERVER

# FIG.44

SAMPLE

DEPTH B1

DEPTH B2

DEPTH B3

DEPTH B4

# FIG.45

SAMPLE

DEPTH B1

DEPTH B2

DEPTH B3

DEPTH B4

# FIG.46

4510

BASE IMAGE

MOIRÉ-PRODUCING PATTERN 4530

PITCH
0.963P

PITCH
0.970P

PITCH
0.976P

PITCH
0.978P

# FIG.47

```
                           4600
                            │

                        ┌────────┐
                        │ START  │
                        └────────┘
                            │
                            ▼
        ┌───────────────────────────────────────┐      4610
        │       GENERATE FIRST PATTERN           │
        └───────────────────────────────────────┘
                            │
                            ▼
        ┌───────────────────────────────────────┐      4620
        │      GENERATE SECOND PATTERN           │
        └───────────────────────────────────────┘
                            │
                            ▼
        ┌───────────────────────────────────────┐      4630
        │            IDENTIFY LAYERS             │
        └───────────────────────────────────────┘
                            │
                            ▼
        ┌───────────────────────────────────────┐      4640
        │  DETERMINE PITCH FOR GENERATING        │
        │  MOIRÉ IMAGE AT SPECIFIC DEPTH LEVEL   │
        │            FOR EACH LAYER              │
        └───────────────────────────────────────┘
                            │
                            ▼                            4650
        ┌───────────────────────────────────────┐
        │          OBTAIN MOIRÉ-                 │
        │        PRODUCING PATTERN               │
        └───────────────────────────────────────┘
                            │
                            ▼
                        ┌────────┐
                        │  END   │
                        └────────┘
```

# FIG.48

START

READ INPUT IMAGE DATA

EXTRACT FEATURE VALUE
OF INPUT IMAGE

INPUT AND SET
LAYER INFORMATION

INPUT AND SET MOIRÉ
DISPLAY INFORMATION

INPUT AND SET BASIC
PATTERN INFORMATION

SET APERTURE/NON-
APERTURE RATIO

SET PHASE SHIFT AMOUNT

SET PITCH RATIO

OUTPUT MOIRÉ PATTERN A

OUTPUT MOIRÉ PATTERN B

END

# FIG.49

COMPUTER SYSTEM
300

DISPLAY UNIT
326

DISPLAY SYSTEM
324

PROCESSOR
302

CPU
302A

CPU
302B

BUS IF
309

306

MEMORY BUS

I/O BUS IF
310

308

I/O BUS

MEMORY        304

MOIRÉ-PRODUCING PATTERN GENERATING APPLICATION
350

312
TERMINAL INTERFACE

314
STORAGE INTERFACE

316
I/O DEVICE INTERFACE

318
NETWORK INTERFACE

320
USER I/O DEVICE

322
STORAGE UNIT

NETWORK
330

# FIG.50

4900

INFORMATION PROCESSING SERVER
4905

TRANSFER UNIT 4910

DATA MANAGING UNIT 4920

STORAGE UNIT 4930

MOIRÉ-PRODUCING PATTERN
GENERATING APPARATUS
4935

READING UNIT 4940

EXTRACTION UNIT 4945

PRODUCTION UNIT 4950

4975

4985A

4985B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4403694 B
- JP H087115 A

- JP H10230674 A

**Non-patent literature cited in the description**

- Image encryption based on moire pattern performed by computational algorithms. **MUNOZ-RODRIGUEZ J.** OPTICS COMMUNICATIONS. ELSEVIER, 15 June 2004, vol. 236, 295-301